# EUROPÄISCHE PATENTSCHRIFT

(11) **EP 3 143 654 B1**
(45) Veröffentlichungstag und Bekanntmachung des Hinweises auf die Patenterteilung: **06.06.2018**
(21) Anmeldenummer: 15722957.6
(22) Anmeldetag: 30.04.2015
(51) Int. Cl.: H01M 2/20, B60L 11/18, H01R 11/28

(54) **VERBINDUNG ZWISCHEN ZWEI BATTERIEMODULEN EINES BATTERIESYSTEMS**
CONNECTION BETWEEN TWO BATTERY MODULES OF A BATTERY SYSTEM
LIAISON ENTRE DEUX MODULES DE BATTERIE D'UN SYSTÈME DE BATTERIE

(30) Priorität: 16.05.2014 DE 102014209273
(43) Veröffentlichungstag der Anmeldung: 22.03.2017
(73) Patentinhaber: Bayerische Motoren Werke Aktiengesellschaft, 80809 München (DE)
(72) Erfinder: HÖFLER, Thomas, 82194 Groebenzell (DE); IDIKURT, Tuncay, 81541 München (DE); KOTTER, Philip, 80796 München (DE); MNIF, Anas, 80933 München (DE)
(86) Internationale Anmeldenummer: PCT/EP2015/059481
(87) Internationale Veröffentlichungsnummer: WO 2015/173030

(56) Entgegenhaltungen:
- EP-A1- 0 623 972
- DE-A1-102009 013 727
- JP-A- 2011 003 433
- US-A- 1 854 489

## Beschreibung

Die Erfindung betrifft eine Vorrichtung, eine Verbindungseinrichtung und eine Baugruppe zum Herstellen einer elektrisch leitenden Verbindung zwischen zwei Batteriemodulen eines Batteriesystems, insbesondere eines elektrisch antreibbaren Kraftfahrzeugs.

In elektrisch antreibbaren Kraftfahrzeugen, insbesondere Elektrofahrzeugen und Hybridelektrofahrzeugen, werden Batteriesysteme mit einer Vielzahl von elektrisch miteinander verschalteten Sekundärbatteriezellen eingesetzt, insbesondere um elektrische Antriebseinrichtungen der Kraftfahrzeuge mit elektrischer Energie zu versorgen. Die Sekundärbatteriezellen sind üblicherweise zur Erleichterung einer Montage und Demontage eines Batteriesystems zu Batteriemodulen zusammengefasst, welche elektrisch miteinander verschaltet sind.

Zum elektrischen Verschalten von Batteriemodulen werden herkömmlich lösbare Verbindungen, wie beispielsweise Schraubverbindungen mit Kabelösen oder Steckverbindungen, eingesetzt, welche an Anschlusspolen von Batteriezellen von miteinander zu verbindenden Batteriemodulen angeordnet werden. Sowohl bei Schraubverbindungen als auch bei Steckverbindungen müssen die Anschlusspole der Batteriezellen speziell präpariert werden, um die jeweilige Verbindungstechnik in den Aufbau eines Batteriesystems zu integrieren, und zwar um entweder Drehmomente eines Schraubbolzens während einer Verschraubung aufnehmen zu können oder um ein Steckergehäuse bzw. ein Steckerschwert mit den Anschlusspolen verbinden zu können.

JP 2011 003 433 A offenbart eine Vorrichtung zum Herstellen einer elektrisch leitenden Verbindung zwischen zwei Batteriezellen eines Batteriemoduls, also einen Zellverbinder. Die Vorrichtung umfasst eine an Anschlusspolen von zwei Batteriezellen festklemmbare Klemmeinheit aus Metall. Die Klemmeinheit umfasst ein fixiertes, C-förmig ausgebildetes Klemmelement und ein bewegliches, C-förmig ausgebildetes Klemmelement. Jedes Klemmelement umfasst zwei Klemmschenkel und einen die Klemmschenkel miteinander verbindenden Steg. Die Klemmschenkel umfassen jeweils mehrere quer zu dem Steg verlaufend, beabstandet voneinander und parallel zueinander angeordnete Federlamellen. Die Klemmelemente sind durch ein Federelement vorgespannt, so dass benachbarte Klemmschenkel der beiden Klemmelemente durch das Federelement voneinander weg gedrängt werden. Die Vorrichtung umfasst zudem ein Gehäuse mit einem Deckel und ein zwischen dem Deckel und der Klemmeinheit angeordnetes Betätigungselement. Wird der Deckel an dem übrigen Gehäuse angeordnet, drängt der Deckel das Betätigungselement gegen Betätigungsvorsprünge an dem Klemmelement, wodurch das Klemmelement verlagert wird, so dass ein Anschlusspol einer Batteriezelle zwischen benachbarten Klemmschenkeln der Klemmelemente eingespannt wird.

EP 0 623 972 A1 offenbart eine Vorrichtung zum Herstellen einer elektrisch leitenden Verbindung zwischen zwei Batterien. Die Vorrichtung umfasst eine an zwei Anschlusspolen der Batterien festklemmbare Klemmeinheit aus Metall. Die Klemmeinheit ist U-förmig ausgebildet, wobei die Klemmeinheit zwei Klemmschenkel und einen die Klemmschenkel miteinander verbindenden Steg aufweist. Die Klemmschenkel und/oder der Steg sind bzw. ist bei an dem Anschlusspol festgeklemmter Klemmeinheit unter Erzeugung einer Rückstellkraft durch einen Kontakt mit dem Anschlusspol elastisch verformt. Jeder Klemmschenkel umfasst zwei quer zu dem Steg verlaufend, beabstandet voneinander und parallel zueinander angeordnete Federlamellen. Die Vorrichtung umfasst zudem ein Gehäuse.

Aufgabe der Erfindung ist es, eine einfach realisierbare und raumsparende Verbindungstechnik zum Herstellen einer elektrisch leitenden Verbindung zwischen zwei Batteriemodulen eines Batteriesystems zur Verfügung zu stellen. Diese Aufgabe wird durch die unabhängigen Ansprüche gelöst. Vorteilhafte Ausgestaltungen sind in den abhängigen Ansprüchen wiedergegeben, welche jeweils für sich genommen oder in verschiedener Kombination miteinander einen Aspekt der Erfindung darstellen können.

Die erfindungsgemäße Vorrichtung zum Herstellen einer elektrisch leitenden Verbindung zwischen zwei Batteriemodulen eines Batteriesystems, insbesondere eines elektrisch antreibbaren Kraftfahrzeugs, umfasst wenigstens eine an einem Anschlusspol einer Batteriezelle eines Batteriemoduls oder an einem an dem Anschlusspol angeordneten, den Anschlusspol mit einem Anschlusspol einer weiteren Batteriezelle des Batteriemoduls elektrisch leitend verbindenden Zellverbinder festklemmbare Klemmeinheit aus Metall. Die Klemmeinheit ist U-förmig oder C-förmig ausgebildet, wobei die Klemmeinheit zwei Klemmschenkel und einen die Klemmschenkel miteinander verbindenden Steg aufweist: Die Klemmschenkel und/oder der Steg sind bzw. ist bei an dem Anschlusspol oder dem Zellverbinder festgeklemmter Klemmeinheit unter Erzeugung einer Rückstellkraft durch einen Kontakt mit dem Anschlusspol bzw. dem Zellverbinder elastisch verformt. Wenigstens ein Klemmschenkel umfasst zumindest zwei quer zu dem Steg verlaufend, beabstandet voneinander und parallel zueinander angeordnete Federlamellen. Die Vorrichtung umfasst wenigstens ein die Klemmeinheit aufnehmendes Gehäuse aus elektrisch isolierendem Material, das zwei parallel zueinander und zu den Klemmschenkeln angeordnete, elastisch verformbare Schutzschenkel aufweist, wobei an wenigstens einem Schutzschenkel an einer dem jeweils anderen Schutzschenkel zugewandten Seite des Schutzschenkels zumindest eine parallel zu den Federlamellen verlaufende Schutzrippe angeordnet ist, die derart von außen zwischen zwei benachbart zueinander angeordnete Federlamellen greift, dass der Abstand zwischen der Schutzrippe und dem ihr gegenüberliegenden Schutzschenkel bei nicht an dem Anschlusspol bzw. dem Zellverbinder festgeklemmter Klemmeinheit kleiner als der Abstand der Federlamellen zu dem ihnen gegenüberliegenden Klemmschenkel ist und dass der Abstand zwischen der Schutzrippe und dem ihr gegenüberliegenden Schutzschenkel bei an dem Anschlusspol bzw. dem Zellverbinder festgeklemmter Klemmeinheit gleich dem Abstand der Federlamellen zu dem ihnen gegenüberliegenden Klemmschenkel ist.

Erfindungsgemäß kann eine elektrisch leitende Verbindung zwischen zwei Batteriemodulen eines Batteriesystems unter Verwendung von wenigstens einer Klemmeinheit erfolgen, wodurch wenigstens eine herkömmliche Schraubverbindung bzw. Steckverbindung entfallen kann, so dass keine Modifikation von Anschlusspolen zur Integration dieser herkömmlichen Verbindungstechniken erforderlich ist. Dies geht mit einer deutlich einfacheren Realisierung der erfindungsgemäßen Verbindungstechnik einher. Herkömmliche Schraubverbindung bzw. Steckverbindung benötigen, insbesondere bei hohen Stromtragfähigkeiten, einen relativ großen Bauraum. Im Vergleich hierzu kann die erfindungsgemäße Verbindungstechnik deutlich raumsparender realisiert werden. Auch muss bei der erfindungsgemäßen Verbindungstechnik kein zusätzlicher Montageraum eingeplant werden, beispielsweise um eine herkömmliche Schraubverbindung betätigen zu können. Aus dem Stand der Technik sind zwar raumsparandere Verbindungslösungen bekannt, jedoch sind die dabei realisierten elektrischen Verbindungen aufgrund ihrer geringeren Größe in der Regel in ihrer Stromtragfähigkeit stark limitiert bzw. entwickeln aufgrund ihres Übergangswiderstandes im Betrieb eine beachtliche Wärme, die zur Beeinträchtigung einer Zellleistung und zu sicherheitskritischen Zuständen von Batteriezellen führen kann.

Die erfindungsgemäße Vorrichtung kann auch zwei oder mehrere Klemmeinheiten umfassen, welche jeweils an einem Anschlusspol einer Batteriezelle eines Batteriemoduls oder an einem an dem Anschlusspol angeordneten, den Anschlusspol mit einem Anschlusspol einer weiteren Batteriezelle des Batteriemoduls elektrisch leitend verbindenden Zellverbinder festklemmbar sind.

Die Klemmeinheit kann beispielsweise zumindest teilweise aus Kupfer gebildet sein.

Bei Verwendung der erfindungsgemäßen Verbindungstechnik kann beispielsweise eine Anordnung eines Schwerts an einem Zellkontaktierungssystem zum elektrisch leitenden Verbinden von Batteriemodulen entfallen. Stattdessen kann eine direkte elektrische Kontaktierung an einem Anschluss bzw. einem Zellverbinder erfolgen. Hierdurch wird weniger Bauraum benötigt als es bei entsprechenden herkömmlichen Steckverbindungen oder Schraubverbindungen mit hohen Stromtragfähigkeiten der Fall ist. Zudem kann über die Klemmeinheit eine größere Übertragungsfläche bereitgestellt werden, als es bei herkömmlichen Steckverbindungen oder Schraubverbindungen mit hohen Stromtragfähigkeiten der Fall ist, wodurch auch bei relativ kleinem Bauraum hohe elektrische Ströme übertragen werden können, ohne dass es zu einer starken Wärmeerzeugung kommt.

Durch die elastische Verformung der Klemmschenkel und/oder des Stegs bzw. die dadurch hervorgerufene Rückstellkraft wird eine ausreichende Klemmkraft erzeugt, um die Klemmeinheit unverlierbar an einem Anschlusspol bzw. einem Zellverbinder festlegen zu können. Durch die U-förmige bzw. C-förmige Ausgestaltung der Klemmeinheit kann diese auf einen Anschlusspol bzw. einen Zellverbinder aufgesteckt werden, so dass die Klemmeinheit den Anschlusspol bzw. den Zellverbinder wenigstens teilweise umgreift.

Der mit den Federlamellen versehene Klemmschenkel kann sich optimal an die jeweilige Formgebung eines Anschlusspols bzw. eines Zellverbinders anpassen, um eine möglichst große Kontaktfläche zur Übertragung von elektrischem Strom bereitstellen zu können. Ein Klemmschenkel kann auch mehr als zwei, beispielsweise 8, 9 oder 10, Federlamellen aufweisen. Es können auch beide Klemmschenkel entsprechende Federlamellen aufweisen.

Da der Abstand der zwischen zwei benachbart zueinander angeordnete Federlamellen greifenden Schutzrippe zu dem ihr gegenüberliegenden Schutzschenkel bei nicht an dem Anschlusspol bzw. dem Zellverbinder festgeklemmter Klemmeinheit kleiner als der Abstand der Federlamellen zu dem ihnen gegenüberliegenden Klemmschenkel ist, bildet die Schutzrippe bei nicht an dem Anschlusspol bzw. dem Zellverbinder festgeklemmter Klemmeinheit einen Berührungsschutz auf raumsparende Art und Weise aus. Beim Aufstecken der Klemmeinheit auf einen Anschlusspol bzw. einen Zellverbinder wird die Schutzrippe unter elastischer Verformung des jeweiligen Schutzschenkels nach außen gedrängt, so dass ein Klemmschenkel der Klemmeinheit in körperlichen Kontakt mit dem Anschlusspol bzw. dem Zellverbinder gelangen kann. An einem Schutzschenkel können auch zwei oder mehrere entsprechende Schutzrippen angeordnet sein. Es können auch beide Schutzschenkel mit entsprechenden Schutzrippen versehen sein. Als elektrisch isolierendes Material kann insbesondere Kunststoff oder ein Faserverbundwerkstoff verwendet werden. Die Schutzrippen können zwischen Berührungsschutzrippen eines durch einen Abschnitt eines Zellkontaktierungssystems gebildeten Schutzabschnitts der Vorrichtung greifen, um den Berührungsschutz weiter zu verbessern.

Vorzugsweise weist wenigstens eine Federlamelle zumindest zwei quer zu dem Steg verlaufend, beabstandet voneinander und parallel zueinander angeordnete Unterlamellen auf. Dies macht eine noch genauere Anpassung der Kontaktfläche zwischen der Klemmeinheit bzw. deren Klemmschenkeln und einem Anschlusspol bzw. einem Zellverbinder möglich. Eine Federlamelle kann auch drei oder mehrere Unterlamellen aufweisen.

Bevorzugt ist an wenigstens einer Federlamelle eine in Längsrichtung der Federlamelle verlaufende Sicke ausgebildet. Hierdurch kann die mit einer Federlamelle aufbringbare Normalkraft bzw. Klemmkraft variiert, insbesondere erhöht werden, um einen Klemmsitz der Klemmeinheit an einem Anschlusspol bzw. einem Zellverbinder zu verbessern. Es kann auch an zwei oder mehreren, insbesondere allen, Federlamellen eine entsprechende Sicke ausgebildet sein.

Vorteilhafterweise ist an wenigstens zwei Federlamellen jeweils zumindest eine Sicke ausgebildet, wobei sich die Federlamellen in der Formgebung ihrer jeweiligen Sicken voneinander unterscheiden. Durch diese Variation der Klemmkräfte können die mit außen liegenden Federlamellen aufbringbaren Klemmkräfte größer als die mit innen liegenden Federlamellen aufbringbaren Klemmkräfte sein. Dies macht eine Feinjustierung der mit der Klemmeinheit erzeugbaren Klemmkräfte möglich.

Nach einer weiteren vorteilhaften Ausgestaltung umfasst die Vorrichtung wenigstens eine elektrisch zwischen dem Anschlusspol und der Klemmeinheit anordbare Beschichtung zum Reduzieren des elektrischen Übergangswiderstands zwischen dem Anschlusspol und der Klemmeinheit, zwischen dem Anschlusspol und dem Zellverbinder oder zwischen dem Zellverbinder und der Klemmeinheit. Durch die einen Übergangswiderstand reduzierende Beschichtung kann ein Übergangswiderstand zur Reduzierung einer Wärmebildung an einem Übergang zwischen dem Anschlusspol und der Klemmeinheit, zwischen dem Anschlusspol und dem Zellverbinder oder zwischen dem Zellverbinder und der Klemmeinheit reduziert werden. Es kann auch sowohl zwischen dem Anschlusspol und dem Zellverbinder als auch zwischen dem Zellverbinder und der Klemmeinheit jeweils eine entsprechende Beschichtung angeordnet sein.

Eine weitere vorteilhafte Ausgestaltung sieht vor, dass die Vorrichtung wenigstens einen auf der dem Anschlusspol bzw. dem Zellverbinder zugewandten Seite des Stegs der Klemmeinheit angeordneten, durch einen Abschnitt eines Zellkontaktierungssystems gebildeten Schutzabschnitt aufweist, der wenigstens an einem einem Klemmschenkel zugewandten Rand zumindest teilweise mit Berührungsschutzrippen versehen ist. Hierdurch kann auf einfache Art und Weise und unter Verwendung eines herkömmlich vorhandenen Bauteils eines Batteriesystems ein erforderlicher Berührungsschutz ausgebildet werden. Durch die Verwendung eines ohnehin vorhandenen Bauteils eines Batteriesystems zur Realisierung eines Berührungsschutzes ist es nicht erforderlich, zusätzlichen Bauraum für den Schutzabschnitt vorzusehen. Der Schutzabschnitt dient einer berührungssicheren Montage bzw. Demontage der Klemmeinheit.

Gemäß einer weiteren vorteilhaften Ausgestaltung umfasst die Vorrichtung wenigstens eine elektrisch leitend mit dem Steg der Klemmeinheit verbindbare Kontaktiereinheit, mit der die Klemmeinheit elektrisch leitend mit einem flexiblen elektrischen Leiter verbindbar ist. Die Kontaktiereinheit kann über eine Schweißverbindung oder eine Crimpverbindung mit dem Steg der Klemmeinheit verbunden sein. Die Kontaktiereinheit kann flach und dadurch raumsparend ausgebildet sein.

Vorteilhafterweise sind an dem Schutzschenkel wenigstens zwei parallel zu den Federlamellen verlaufende Schutzrippen beabstandet voneinander ausgebildet, wobei dem Steg der Klemmeinheit abgewandte Enden der Schutzrippen über einen gemeinsamen Verbindungssteg miteinander verbunden sind. Hierdurch werden die Schutzrippen zu einer Einheit miteinander verbunden, was mit einer einfacheren Betätigung der Schutzrippen bzw. einer einfacheren Handhabung der Vorrichtung einhergeht.

Eine weitere vorteilhafte Ausgestaltung sieht vor, dass die Vorrichtung wenigstens ein die Klemmeinheit aufnehmendes Gehäuse aus elektrisch isolierendem Material aufweist, das zwei parallel zueinander und zu den Klemmschenkeln angeordnete Schutzschenkel und wenigstens einen auf der dem Zellverbinder zugewandten Seite des Stegs der Klemmeinheit und parallel zu dem Steg der Klemmeinheit verlaufenden Schutzabschnitt aufweist, wobei an der dem Zellverbinder zugewandten Seite des Schutzabschnitts wenigstens ein parallel zu den Schutzschenkeln verlaufender Schutzvorsprung angeordnet ist. Der Schutzvorsprung macht die Klemmeinheit von der Verbindungsseite des Gehäuses her weitestgehend unzugänglich, um einen Berührungsschutz raumsparend zu realisieren. Der Schutzabschnitt kann auch zwei oder mehrere in Längsrichtung des Schutzvorsprungs in Richtung des Zellverbinders ragende Schutzvorsprünge aufweisen. Der Schutzabschnitt des Gehäuses kann zur Verbesserung des Berührungsschutzes mit einem Abschnitt eines Zellkontaktierungssystems zusammenwirken. Als elektrisch isolierendes Material elastischer Verformung des jeweiligen Schutzschenkels nach außen gedrängt, so dass ein Klemmschenkel der Klemmeinheit in körperlichen Kontakt mit dem Anschlusspol bzw. dem Zellverbinder gelangen kann. An einem Schutzschenkel können auch zwei oder mehrere entsprechende Schutzrippen angeordnet sein. Es können auch beide Schutzschenkel mit entsprechenden Schutzrippen versehen sein. Als elektrisch isolierendes Material kann insbesondere Kunststoff oder ein Faserverbundwerkstoff verwendet werden. Die Schutzrippen können zwischen Berührungsschutzrippen eines durch einen Abschnitt eines Zellkontaktierungssystems gebildeten Schutzabschnitts der Vorrichtung greifen, um den Berührungsschutz weiter zu verbessern.

Vorteilhafterweise sind an dem Schutzschenkel wenigstens zwei parallel zu den Federlamellen verlaufende Schutzrippen beabstandet voneinander ausgebildet, wobei dem Steg der Klemmeinheit abgewandte Enden der Schutzrippen über einen gemeinsamen Verbindungssteg miteinander verbunden sind. Hierdurch werden die Schutzrippen zu einer Einheit miteinander verbunden, was mit einer einfacheren Betätigung der Schutzrippen bzw. einer einfacheren Handhabung der Vorrichtung einhergeht.

Eine weitere vorteilhafte Ausgestaltung sieht vor, dass die Vorrichtung wenigstens ein die Klemmeinheit aufnehmendes Gehäuse aus elektrisch isolierendem Material aufweist, das zwei parallel zueinander und zu den Klemmschenkeln angeordnete Schutzschenkel und wenigstens einen auf der dem Zellverbinder zugewandten Seite des Stegs der Klemmeinheit und parallel zu dem Steg der Klemmeinheit verlaufenden Schutzabschnitt aufweist, wobei an der dem Zellverbinder zugewandten Seite des Schutzabschnitts wenigstens ein parallel zu den Schutzschenkeln verlaufender Schutzvorsprung angeordnet ist. Der Schutzvorsprung macht die Klemmeinheit von der Verbindungsseite des Gehäuses her weitestgehend unzugänglich, um einen Berührungsschutz raumsparend zu realisieren. Der Schutzabschnitt kann auch zwei oder mehrere in Längsrichtung des Schutzvorsprungs in Richtung des Zellverbinders ragende Schutzvorsprünge aufweisen. Der Schutzabschnitt des Gehäuses kann zur Verbesserung des Berührungsschutzes mit einem Abschnitt eines Zellkontaktierungssystems zusammenwirken. Als elektrisch isolierendes Material kann insbesondere Kunststoff oder ein Faserverbundwerkstoff verwendet werden.

Die erfindungsgemäße Verbindungseinrichtung zum Herstellen einer elektrisch leitenden Verbindung zwischen zwei Batteriemodulen eines Batteriesystems, insbesondere eines elektrisch antreibbaren Kraftfahrzeugs, umfasst wenigstens einen flexiblen elektrischen Leiter und wenigstens eine elektrisch leitend mit dem flexiblen elektrischen Leiter verbundene Vorrichtung nach einer der vorgenannten Ausgestaltungen oder einer beliebigen Kombination derselben. Mit der Verbindungseinrichtung sind die oben mit Bezug auf die Vorrichtung genannten Vorteile und Ausführungsformen entsprechend verbunden.

Durch die Flexibilität des elektrischen Leiters ist gegenüber der herkömmlichen Verwendung von starren Verbindungen ein Toleranzausgleich zwischen den elektrisch miteinander zu verbindenden Batteriemodulen bzw. deren Batteriezellen möglich. Die Verbindungseinrichtung kann auch zwei über einen flexiblen elektrischen Leiter elektrisch leitend miteinander verbundene Vorrichtungen aufweisen.

Die erfindungsgemäße Baugruppe zum Herstellen einer elektrisch leitenden Verbindung zwischen zwei Batteriemodulen eines Batteriesystems, insbesondere eines elektrisch antreibbaren Kraftfahrzeugs, umfasst wenigstens einen Zellverbinder, mit dem Anschlusspole von zwei Batteriezellen eines Batteriemodule elektrisch leitend miteinander verbindbar sind, und wenigstens eine Vorrichtung nach einer der vorgenannten Ausgestaltungen oder einer beliebigen Kombination derselben. Mit der Baugruppe sind die oben mit Bezug auf die Vorrichtung genannten Vorteile und Ausführungsformen entsprechend verbunden.

Die Klemmeinheit der Vorrichtung kann hierbei über den Zellverbinder elektrisch leitend mit einem Anschlusspol einer Batteriezelle verbunden werden. Die Baugruppe kann auch zwei oder mehrere Vorrichtungen aufweisen. Des Weiteren kann die Baugruppe eine vorgenannte Verbindungseinrichtung aufweisen.

Gemäß einer vorteilhaften Ausgestaltung umfasst die Baugruppe wenigstens ein die Klemmeinheit aufnehmendes Gehäuse aus elektrisch isolierendem Material auf, das zwei parallel zueinander und zu den Klemmschenkeln angeordnete Schutzschenkel aufweist, wobei die Schutzschenkel über wenigstens eine quer zu den Schutzschenkeln verlaufende Schutzrippe miteinander verbunden sind, die auf der dem Zellverbinder zugewandten Seite des Stegs der Klemmeinheit verläuft,
- wobei die Klemmschenkel gleich ausgebildet sind und jeweils Federlamellen aufweisen, wobei an dem Zellverbinder wenigstens eine in Richtung des Stegs der Klemmeinheit offene Ausnehmung ausgebildet ist, welche mit einander gegenüberliegenden Freiräumen zwischen jeweils zwei benachbart zueinander angeordneten Federlamellen der Klemmschenkel fluchtet, wobei die Schutzrippe durch die Freiräume und durch die Ausnehmung verläuft,
- wobei die Schutzrippe derart ausgebildet ist, dass durch sie an der dem Zellverbinder zugewandten Seite des Gehäuses eine Aufnahme ausgebildet wird, welche innerhalb einer an der dem Zellverbinder zugewandten Seite der Klemmeinheit ausgebildeten Aufnahme angeordnet ist.

Durch die Schutzrippe bzw. die durch sie begrenzte Aufnahme an der dem Zellverbinder zugewandten Seite des Stegs der Klemmeinheit wird ein Berührungsschutz nach IPXXB auf raumsparende Art und Weise ausgebildet. Die Schutzschenkel können auch über zwei oder mehrere Schutzrippen miteinander verbunden sein, wobei die Anzahl an Freiräumen zwischen benachbarten Federlamellen und an Aufnahmen an dem Zellverbinder entsprechend anzupassen ist. Die Schutzrippen können zur Verbesserung des Berührungsschutzes mit einem Abschnitt eines Zellkontaktierungssystems eines Batteriesystems zusammenwirken. Als elektrisch isolierendes Material kann insbesondere Kunststoff oder ein Faserverbundwerkstoff verwendet werden.

Nach einer weiteren vorteilhaften Ausgestaltung weist der Zellverbinder wenigstens einen im Längsschnitt im Wesentlichen M-förmig ausgebildeten Verbindungsabschnitt mit zwei parallel zu den Klemmschenkeln verlaufenden Verbindungsschwertern auf, über den der Zellverbinder mit dem Anschlusspol verbindbar ist, wobei an wenigstens einem Verbindungsschwert zumindest eine Klemmeinheit festklemmbar ist. Die Verbindungsschwerter können deutlich schmaler als ein Anschlusspol einer Batteriezelle ausgebildet sein. Der Zellverbinder kann zur Herstellung seiner jeweiligen Formgebung aus einem Metallblech ausgestanzt und umgeformt werden. Die Verbindungsschwerter können sowohl bei parallel als auch in Reihe geschalteten Zellen eingesetzt werden.

Vorteilhafterweise ist an jedem Verbindungsschwert wenigstens eine Klemmeinheit der Vorrichtung festklemmbar, wobei die Klemmeinheiten in einem gemeinsamen Gehäuse der Baugruppe aufgenommen sind, wobei jede Klemmeinheit zwischen jeweils zwei parallel zu den Klemmschenkeln der Klemmeinheiten verlaufenden und beabstandet voneinander angeordneten Schutzschenkeln des Gehäuses angeordnet sind, wobei alle Schutzschenkel des Gehäuses über wenigstens einen gemeinsamen Steg des Gehäuses miteinander verbunden sind. Die an den Verbindungsschwertern angeordneten Klemmeinheiten können deutlich kleiner als eine unmittelbar an einem Anschlusspol angeordnete Klemmeinheit ausgebildet sein. Die Schutzschenkel des Gehäuses bilden einen Berührungsschutz aus, insbesondere da die eine Klemmeinheit zwischen sich einschließenden Schutzschenkel relativ nah beieinander angeordnet sind. Das Gehäuse ist aus einem elektrisch isolierenden Material, insbesondere Kunststoff oder Faserverbundwerkstoff, gebildet.

Eine weitere vorteilhafte Ausgestaltung sieht vor, dass wenigstens eine Klemmeinheit und der Zellverbinder derart ausgebildet sind, dass die Klemmeinheit über eine Clips-Verbindung mit dem Zellverbinder verbindbar ist. Dies stellt einen sicheren Schutz gegen ein selbsttätiges Lösen der Klemmeinheit von dem Zellverbinder dar. Zusätzlich kann das Gehäuse der Vorrichtung über einen Rastmechanismus mit einem Zellkontaktierungssystem eines Batteriesystems verbunden sein.

Weitere Einzelheiten, Merkmale und Vorteile der Erfindung ergeben sich aus der nachfolgenden Beschreibung und den Figuren. Es zeigen:
- Figur 1: eine perspektivische Darstellung eines Ausführungsbeispiels einer an einem Anschlusspol einer Batteriezelle angeordneten erfindungsgemäßen Vorrichtung,
- Figur 2: eine Stirnansicht der in Figur 1 gezeigten Vorrichtung,
- Figur 3: eine perspektivische Darstellung eines weiteren Ausführungsbeispiels einer an einem Anschlusspol einer Batteriezelle angeordneten erfindungsgemäßen Vorrichtung,
- Figur 4: eine perspektivische Darstellung eines weiteren Ausführungsbeispiels einer an einem Anschlusspol einer Batteriezelle angeordneten erfindungsgemäßen Vorrichtung,
- Figur 5: eine perspektivische Detailansicht einer Klemmeinheit eines weiteren Ausführungsbeispiels für eine erfindungsgemäße Vorrichtung,
- Figur 6: eine perspektivische Darstellung eines weiteren Ausführungsbeispiels für eine erfindungsgemäße Vorrichtung,
- Figur 7: eine Stirnansicht der in Figur 6 gezeigten Vorrichtung,
- Figur 8: eine Stirnansicht der in Figur 6 gezeigten Vorrichtung in einem freien Zustand,
- Figur 9: eine Stirnansicht der in Figur 6 gezeigten Vorrichtung in einem festgeklemmten Zustand,
- Figur 10: eine schematische Schnittdarstellung eines weiteren Ausführungsbeispiels für eine erfindungsgemäße Vorrichtung,
- Figur 11: eine perspektivische Viertelschnittdarstellung eines Ausführungsbeispiels für eine erfindungsgemäße Baugruppe,
- Figur 12: eine Schnittdarstellung eines weiteren Ausführungsbeispiels für eine erfindungsgemäße Baugruppe,
- Figur 13: eine perspektivische Teilschnittdarstellung der in Figur 12 gezeigten Baugruppe,
- Figur 14: eine Schnittdarstellung eines weiteren Ausführungsbeispiels für eine erfindungsgemäße Baugruppe,
- Figur 15: eine perspektivische Viertelschnittdarstellung der in Figur 14 gezeigten Baugruppe,
- Figur 16: eine perspektivische Darstellung eines weiteren Ausführungsbeispiels für eine erfindungsgemäße Baugruppe, und
- Figur 17: eine perspektivische Detaildarstellung der in Figur 16 gezeigten Baugruppe.

In den Figuren sind gleiche Bauteile mit denselben Bezugszeichen versehen.

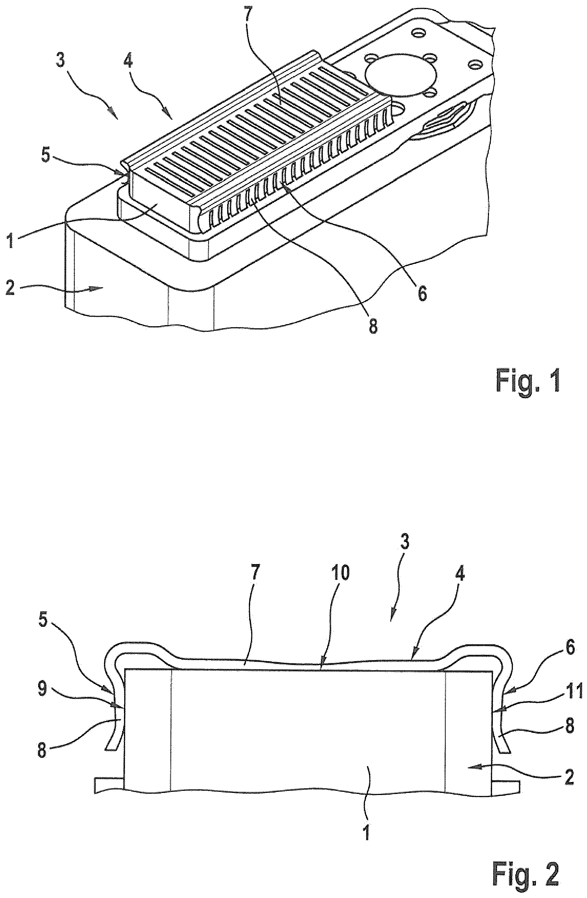

Figur 1 zeigt eine perspektivische Darstellung eines Ausführungsbeispiels einer an einem aus Aluminium gebildeten Anschlusspol 1 einer Batteriezelle 2 angeordneten erfindungsgemäßen Vorrichtung 3 zum Herstellen einer elektrisch leitenden Verbindung zwischen zwei Batteriemodulen eines nicht weiter dargestellten Batteriesystems eines elektrisch antreibbaren Kraftfahrzeugs. Die Vorrichtung 3 umfasst eine an dem Anschlusspol 1 der Batteriezelle 2 eines Batteriemoduls festgeklemmte Klemmeinheit 4 aus Metall.

Die Klemmeinheit 4 ist U-förmig oder C-förmig ausgebildet, wie es insbesondere Figur 2 zu entnehmen ist. Die Klemmeinheit 4 weist zwei Klemmschenkel 5 und 6 und einen die Klemmschenkel 5 und 6 miteinander verbindenden Steg 7 auf. Die Klemmschenkel 5 und 6 und/oder der Steg 7 sind bzw. ist bei an dem Anschlusspol 1 festgeklemmter Klemmeinheit 4 unter Erzeugung einer Rückstellkraft durch einen körperlichen Kontakt mit dem Anschlusspol 1 elastisch verformt. Die Klemmschenkel 5 und 6 weisen jeweils eine Vielzahl von quer zu dem Steg 7 verlaufend, beabstandet voneinander und parallel zueinander angeordneten Federlamellen 8 auf.

Zwischen dem Anschlusspol 1 und der Klemmeinheit 4 kann wenigstens eine nicht näher dargestellte Beschichtung zum Reduzieren des elektrischen Übergangswiderstands zwischen dem Anschlusspol 1 und der Klemmeinheit 4 angeordnet sein. Die Beschichtung kann stoffschlüssig mit dem Anschlusspol 1 und/oder der Klemmeinheit 4 verbunden sein. Es kann auch sowohl die dem Anschlusspol 1 zugewandte Seite der Klemmeinheit 4 als auch die der Klemmeinheit 4 zugewandte Seite des Anschlusspols 1 jeweils mit einer entsprechenden Beschichtung zumindest teilweise versehen sein.

Figur 2 zeigt eine Stirnansicht der in Figur 1 gezeigten Vorrichtung 3 bzw. Klemmeinheit 4. Die Klemmeinheit 4 ist in drei Kontaktierungsbereichen 9, 10 und 11 elektrisch leitend und körperlich mit dem Anschlusspol 1 verbunden. Die Beschichtung kann im Kontaktierungsbereich 9, 10 und/oder 11 angeordnet sein.

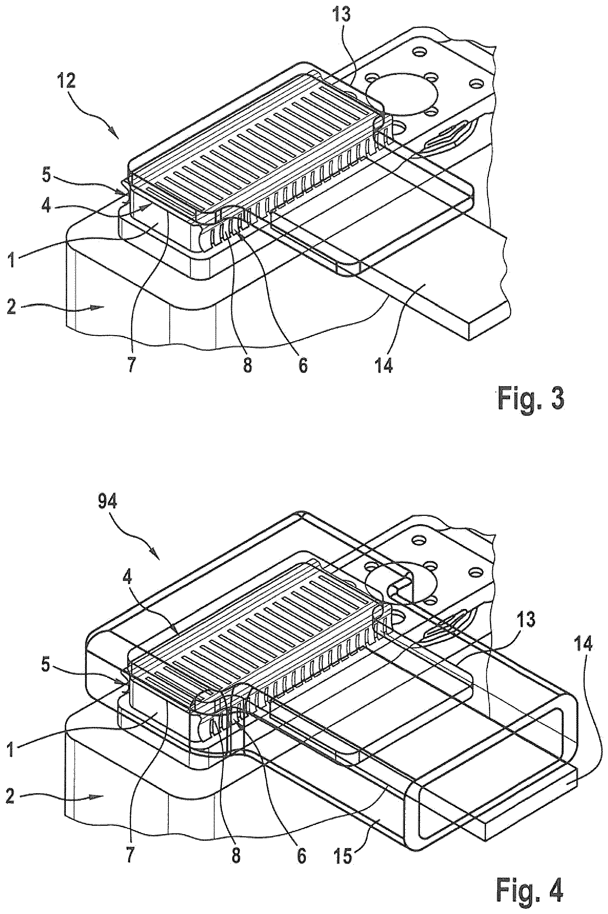

Figur 3 zeigt eine perspektivische Darstellung eines weiteren Ausführungsbeispiels einer an einem Anschlusspol 1 einer Batteriezelle 2 angeordneten erfindungsgemäßen Vorrichtung 12 zum Herstellen einer elektrisch leitenden Verbindung zwischen zwei Batteriemodulen eines nicht weiter dargestellten Batteriesystems eines elektrisch antreibbaren Kraftfahrzeugs. Die Vorrichtung 12 umfasst eine an dem Anschlusspol 1 der Batteriezelle 2 eines Batteriemoduls festgeklemmte Klemmeinheit 4 aus Metall, welche entsprechend den Figuren 1 und 2 ausgebildet ist. Die Vorrichtung 12 umfasst des Weiteren eine elektrisch leitend mit dem Steg 7 der Klemmeinheit 4 verbundene, transparent dargestellte Kontaktiereinheit 13, mit der die Klemmeinheit 4 elektrisch leitend mit einem flexiblen elektrischen Leiterkabel 14 verbunden ist.

Figur 4 zeigt eine perspektivische Darstellung eines weiteren Ausführungsbeispiels einer an einem Anschlusspol 1 einer Batteriezelle 2 angeordneten erfindungsgemäßen Vorrichtung 94 zum Herstellen einer elektrisch leitenden Verbindung zwischen zwei Batteriemodulen eines nicht weiter dargestellten Batteriesystems eines elektrisch antreibbaren Kraftfahrzeugs. Die Vorrichtung 94 umfasst eine an dem Anschlusspol 1 der Batteriezelle 2 eines Batteriemoduls festgeklemmte Klemmeinheit 4 aus Metall, welche entsprechend den Figuren 1 bis 3 ausgebildet ist. Die Vorrichtung 94 umfasst des Weiteren eine elektrisch leitend mit dem Steg 7 der Klemmeinheit 4 verbundene, transparent dargestellte Kontaktiereinheit 13, mit der die Klemmeinheit 4 elektrisch leitend mit einem elektrischen Leiterkabel 14 verbunden ist und die entsprechend Figur 3 ausgebildet ist. Ferner umfasst die Vorrichtung 94 ein transparent dargestelltes Gehäuse 15, welches die Klemmeinheit 4 und die Kontaktiereinheit 13 umgibt.

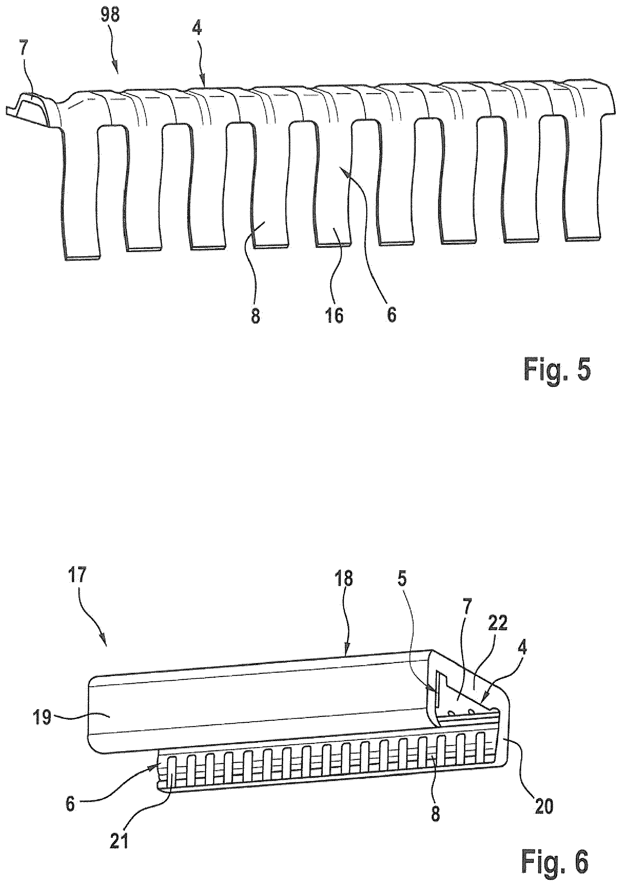

Figur 5 zeigt eine perspektivische Detailansicht einer Klemmeinheit 4 eines weiteren Ausführungsbeispiels für eine erfindungsgemäße Vorrichtung 98. An jeder Federlamelle 8 ist eine in Längsrichtung der jeweiligen Federlamelle 8 verlaufende Sicke 16 ausgebildet, wobei sich die Federlamellen 8 in der Formgebung ihrer jeweiligen Sicken 16 derart voneinander unterscheiden, dass mit den links und rechts gezeigten äußeren Federlamellen 8 eine größere Klemmkraft erzeugbar ist als mit mittleren Federlamellen 8. Die Sicken 16 erstrecken sich bis in den Bereich des Stegs 7 der Klemmeinheit 4.

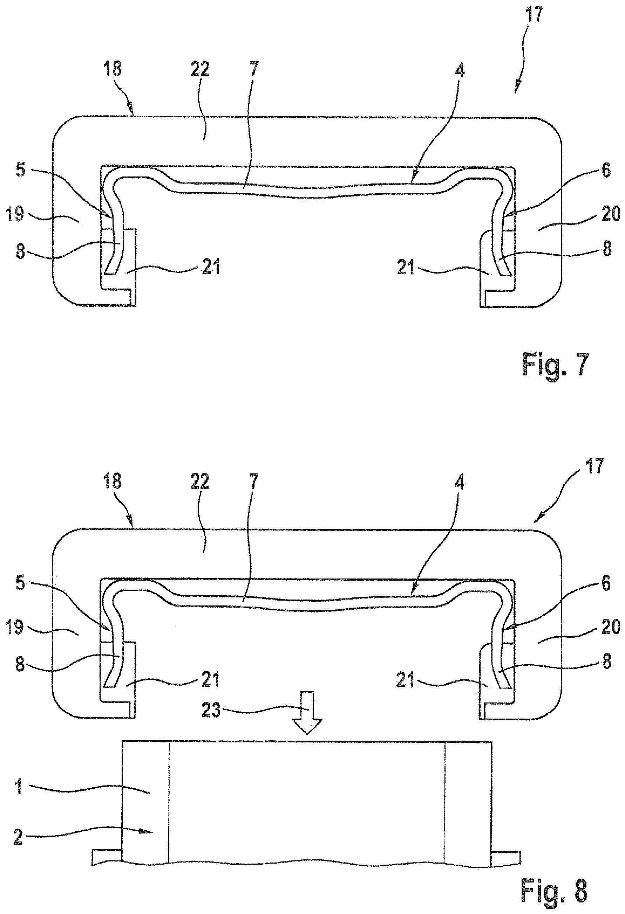

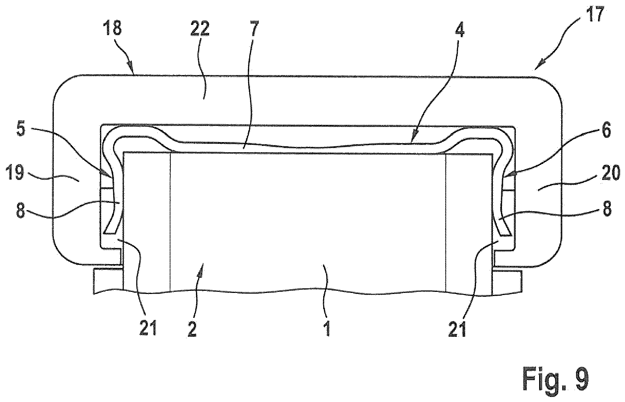

Figur 6 zeigt eine perspektivische Darstellung eines weiteren Ausführungsbeispiels für eine erfindungsgemäße Vorrichtung 17 zum Herstellen einer elektrisch leitenden Verbindung zwischen zwei Batteriemodulen eines nicht weiter dargestellten Batteriesystems eines elektrisch antreibbaren Kraftfahrzeugs, Die Vorrichtung 17 umfasst eine an dem in den Figuren 8 und 9 gezeigten Anschlusspol 1 der Batteriezelle 2 eines Batteriemoduls festklemmbare Klemmeinheit 4 aus Metall, welche entsprechend den Figuren 1 bis 4 ausgebildet ist. Des Weiteren umfasst die Vorrichtung 17 ein die Klemmeinheit 4 aufnehmendes, U-förmig oder C-förmig ausgebildetes Gehäuse 18 aus elektrisch isolierendem Material, das zwei parallel zueinander und zu den Klemmschenkeln 5 und 6 angeordnete, elastisch verformbare Schutzschenkel 19 und 20 und einen die Schutzschenkel 19 und 20 miteinander verbindenden Steg 22 aufweist. An jedem Schutzschenkel 19 bzw. 20 sind an einer dem jeweils anderen Schutzschenkel 20 bzw. 19 zugewandten Seite des Schutzschenkels 19 bzw. 20 mehrere parallel zu den Federlamellen 8 verlaufende Schutzrippen 21 angeordnet, die derart jeweils von außen zwischen zwei benachbart zueinander angeordneten Federlamellen 8 greifen, dass der Abstand zwischen den Schutzrippen 21 und dem ihnen gegenüberliegenden Schutzschenkel 20 bzw. 19 bei nicht an dem Anschlusspol 1 festgeklemmter Klemmeinheit 4 kleiner als der Abstand der Federlamellen 8 zu dem ihnen gegenüberliegenden Klemmschenkel 5 bzw. 6 ist, wie es insbesondere in den Figuren 7 und 8 gezeigt ist, und dass der Abstand zwischen den Schutzrippen 21 und dem ihnen gegenüberliegenden Schutzschenkel 20 bzw. 19 bei an dem Anschlusspol 1 festgeklemmter Klemmeinheit 4 gleich dem Abstand der Federlamellen 8 zu dem ihnen gegenüberliegenden Klemmschenkel 5 bzw. 6 ist, wie es in Figur 9 gezeigt ist.

Figur 7 zeigt eine Stirnansicht der in Figur 6 gezeigten Vorrichtung 17. Es ist zu erkennen, wie die Schutzrippen 21 zwischen die Federlamellen 8 greifen. Zudem ist zu sehen, dass der Abstand zwischen den an einem Schutzschenkel 19 bzw. 20 angeordneten Schutzrippen 21 und dem ihnen gegenüberliegenden Schutzschenkel 20 bzw. 19 bei nicht an dem Anschlusspol 1 festgeklemmter Klemmeinheit 4 kleiner als der Abstand der an einem Klemmschenkel 5 bzw. 6 angeordneten Federlamellen 8 zu dem ihnen gegenüberliegenden Klemmschenkel 6 bzw. 5 ist.

Figur 8 zeigt eine Stirnansicht der in Figur 6 gezeigten Vorrichtung 17 in einem freien Zustand, in dem die Klemmeinheit 4 nicht auf den Anschlusspol 1 aufgesteckt bzw. an diesem festgeklemmt ist. Die Vorrichtung 17 kann in Richtung des Pfeils 23 bewegt werden, um die Klemmeinheit 4 auf den Anschlusspol 1 aufzustecken.

Figur 9 zeigt eine Stirnansicht der in Figur 6 gezeigten Vorrichtung 17 in einem an dem Anschlusspol 1 festgeklemmten Zustand. Durch den dabei erfolgenden körperlichen Kontakt der Schutzrippen 21 mit dem Anschlusspol 1 sind die an den gegenüberliegenden Schutzschenkeln 19 und 20 angeordneten Schutzrippen 21 unter elastischer Verformung der Schutzschenkel 19 und 20 und/oder des Stegs 22 und unter Erzeugung einer Rückstellkraft auseinander gedrängt worden.

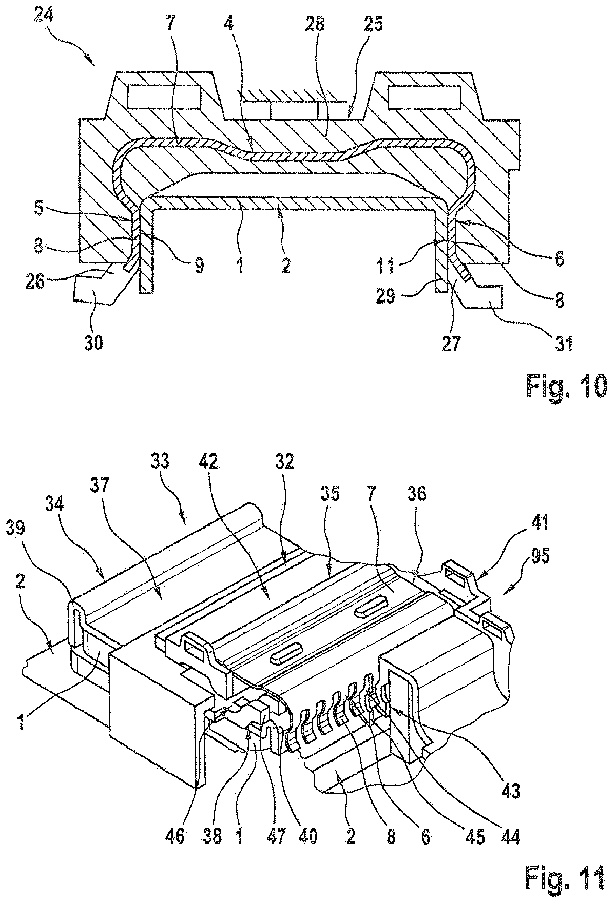

Figur 10 zeigt eine schematische Schnittdarstellung eines weiteren Ausführungsbeispiels für eine erfindungsgemäße Vorrichtung 24 zum Herstellen einer elektrisch leitenden Verbindung zwischen zwei Batteriemodulen eines nicht weiter dargestellten Batteriesystems eines elektrisch antreibbaren Kraftfahrzeugs. Die Vorrichtung 24 umfasst eine an dem Anschlusspol 1 der Batteriezelle 2 eines Batteriemoduls festgeklemmte Klemmeinheit 4 aus Metall, welche entsprechend den Figuren 1 bis 4 und 6 bis 9 ausgebildet ist. Des Weiteren umfasst die Vorrichtung 24 ein die Klemmeinheit 4 aufnehmendes, U-förmig oder C-förmig ausgebildetes Gehäuse 25 aus elektrisch isolierendem Material, das zwei parallel zueinander und zu den Klemmschenkeln 5 und 6 angeordnete, elastisch verformbare Schutzschenkel 26 und 27 und einen die Schutzschenkel 26 und 27 miteinander verbindenden Steg 28 aufweist. An jedem Schutzschenkel 26 bzw. 27 sind an einer dem jeweils anderen Schutzschenkel 27 bzw. 26 zugewandten Seite des Schutzschenkels 26 bzw. 27 mehrere parallel zu den Federlamellen 8 verlaufende Schutzrippen 29 angeordnet, die derart jeweils von außen zwischen zwei benachbart zueinander angeordnete Federlamellen 8 greifen, dass der Abstand zwischen den Schutzrippen 29 und dem ihnen gegenüberliegenden Schutzschenkel 27 bzw. 26 bei nicht an dem Anschlusspol 1 festgeklemmter Klemmeinheit 4 kleiner als der Abstand der Federlamellen 8 zu dem ihnen gegenüberliegenden Klemmschenkel 5 bzw. 6 ist, wie es in Figur 10 bezüglich des rechts dargestellten Schutzschenkels 27 gezeigt ist, und dass der Abstand zwischen den Schutzrippen 29 und dem ihnen gegenüberliegenden Schutzschenkel 27 bzw. 26 bei an dem Anschlusspol 1 festgeklemmter Klemmeinheit 4 gleich dem Abstand der Federlamellen 8 zu dem ihnen gegenüberliegenden Klemmschenkel 5 bzw. 6 ist, wie es in Figur 10 bezüglich des links dargestellten Schutzschenkels 26 gezeigt ist. Durch den körperlichen Kontakt der Schutzrippen 29 mit dem Anschlusspol 1 sind die an dem Schutzschenkel 26 angeordneten Schutzrippen 29 unter elastischer Verformung des Schutzschenkels 26 und/oder des Stegs 28 und unter Erzeugung einer Rückstellkraft verdrängt worden. Dem Steg 28 abgewandte Enden der Schutzrippen 29 sind jeweils über einen gemeinsamen Verbindungssteg 30 bzw. 31 miteinander verbunden.

Figur 11 zeigt eine perspektivische Viertelschnittdarstellung eines Ausführungsbeispiels für eine erfindungsgemäße Baugruppe 32 zum Herstellen einer elektrisch leitenden Verbindung zwischen zwei Batteriemodulen eines Batteriesystems 33 eines elektrisch antreibbaren Kraftfahrzeugs. Die Baugruppe 32 umfasst einen Zellverbinder 34, mit dem Anschlusspole 1 von zwei Batteriezellen 2 eines Batteriemoduls elektrisch leitend miteinander verbunden sind. Des Weiteren umfasst die Baugruppe 32 eine Vorrichtung 35 zum Herstellen einer elektrisch leitenden Verbindung zwischen zwei Batteriemodulen des Batteriesystems 33.

Die Vorrichtung 35 umfasst eine an dem Anschlusspol 1 der Batteriezelle 2 des Batteriemoduls festgeklemmte Klemmeinheit 36 aus Metall, deren Ausgestaltung im Wesentlichen der Ausgestaltung der in den Figuren 1 bis 4 und 6 bis 10 gezeigten Klemmeinheit 4 entspricht.

Der Zellverbinder 34 umfasst zwei miteinander verbundene, im Längsschnitt jeweils im Wesentlichen M-förmig ausgebildete Verbindungsabschnitte 37 und 38 mit jeweils zwei parallel zu den Klemmschenkeln 5 und 6 verlaufenden Verbindungsschwertern 39 bzw. 40, wobei der Zellverbinder 34 über die Verbindungsabschnitte 37 und 38 mit den Anschlusspolen 1 verbunden ist. Die Klemmeinheit 36 und der Zellverbinder 34 sind derart ausgebildet, dass die Klemmeinheit 36 über eine Clips-Verbindung mit dem Zellverbinder 34 verbunden ist. Hierzu sind die Klemmschenkel 5 und 6 in einem an den Steg 7 angrenzenden Bereich nach außen gewölbt ausgebildet, während die Verbindungsschwerter 40 komplementär hierzu nach außen gewölbt ausgebildet sind.

Zwischen dem Anschlusspol 1 und dem Zellverbinder 34 und/oder zwischen dem Zellverbinder 34 und der Klemmeinheit 36 kann wenigstens eine nicht näher dargestellte Beschichtung zum Reduzieren des elektrischen Übergangswiderstands zwischen dem Anschlusspol 1 und dem Zellverbinder 34 bzw. dem Zellverbinder 34 und der Klemmeinheit 36 angeordnet sein. Die Beschichtung kann stoffschlüssig mit dem Anschlusspol 1 und/oder dem Zellverbinder 34 bzw. mit dem Zellverbinder 34 und/oder der Klemmeinheit 36 verbunden sein.

Die Baugruppe 32 umfasst des Weiteren ein die Klemmeinheit 36 aufnehmendes Gehäuse 41 aus elektrisch isolierendem Material, das zwei parallel zueinander und zu den Klemmschenkeln 5 und 6 angeordnete, elastisch verformbare Schutzschenkel 42 und 43 aufweist. An jedem Schutzschenkel 42 bzw. 43 sind an einer dem jeweils anderen Schutzschenkel 43 bzw. 42 zugewandten Seite des Schutzschenkels 42 bzw. 43 mehrere parallel zu den Federlamellen 8 verlaufende Schutzrippen 44 angeordnet, die derart jeweils von außen zwischen zwei benachbart zueinander angeordnete Federlamellen 8 greifen, dass der Abstand zwischen den Schutzrippen 44 und dem ihnen gegenüberliegenden Schutzschenkel 43 bzw. 42 bei nicht an dem Anschlusspol 1 festgeklemmter Klemmeinheit 36 kleiner als der Abstand der Federlamellen 8 zu dem ihnen gegenüberliegenden Klemmschenkel 5 bzw. 6 ist und dass der Abstand zwischen den Schutzrippen 44 und dem ihnen gegenüberliegenden Schutzschenkel 43 bzw. 42 bei an dem Anschlusspol 1 festgeklemmter Klemmeinheit 36 gleich dem Abstand der Federlamellen 8 zu dem ihnen gegenüberliegenden Klemmschenkel 5 bzw. 6 ist. Die unteren Enden der Schutzrippen 44 sind über einen gemeinsamen Verbindungssteg 45 miteinander verbunden.

Die Vorrichtung 35 umfasst des Weiteren einen auf der dem Anschlusspol 1 bzw. dem Zellverbinder 34 zugewandten Seite des Stegs 7 der Klemmeinheit 36 angeordneten, durch einen Abschnitt eines Zellkontaktierungssystems 95 gebildeten Schutzabschnitt 46, der an jedem einem Schutzschenkel 42 bzw. 43 zugewandten Rand mit Berührungsschutzrippen 47 versehen ist. Die Schutzrippen 44 greifen zwischen die Berührungsschutzrippen 47.

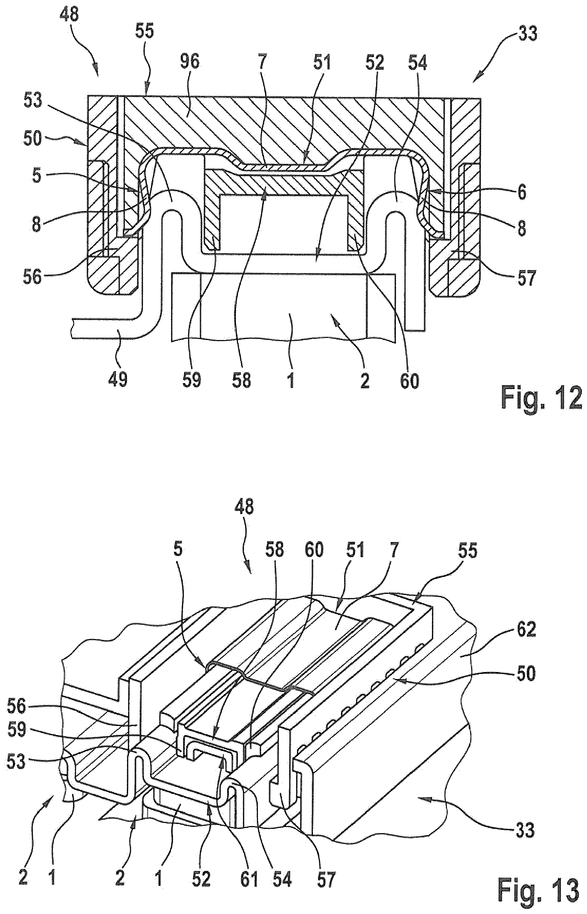

Figur 12 zeigt eine Schnittdarstellung eines weiteren Ausführungsbeispiels für eine erfindungsgemäße Baugruppe 48 zum Herstellen einer elektrisch leitenden Verbindung zwischen zwei Batteriemodulen eines Batteriesystems 33 eines elektrisch antreibbaren Kraftfahrzeugs. Die Baugruppe 48 umfasst einen Zellverbinder 49, mit dem Anschlusspole 1 von zwei Batteriezellen 2 eines Batteriemoduls elektrisch leitend miteinander verbunden sind. Des Weiteren umfasst die Baugruppe 48 eine Vorrichtung 50 zum Herstellen einer elektrisch leitenden Verbindung zwischen zwei Batteriemodulen des Batteriesystems 33.

Die Vorrichtung 50 umfasst eine an dem Zellverbinder 49 festgeklemmte Klemmeinheit 51 aus Metall, deren Ausgestaltung im Wesentlichen der Ausgestaltung der in den Figuren 1 bis 4 und 6 bis 11 gezeigten Klemmeinheit 4 bzw. 36 entspricht.

Der Zellverbinder 49 umfasst einen im Längsschnitt im Wesentlichen M-förmig ausgebildeten Verbindungsabschnitt 52 mit zwei parallel zu den Klemmschenkeln 5 und 6 verlaufenden Verbindungsschwertern 53 bzw. 54, wobei der Zellverbinder 49 über den Verbindungsabschnitt 52 mit dem Anschlusspol 1 verbunden ist.

Zwischen dem Anschlusspol 1 und dem Zellverbinder 49 und/oder zwischen dem Zellverbinder 49 und der Klemmeinheit 51 kann wenigstens eine nicht näher dargestellte Beschichtung zum Reduzieren des elektrischen Übergangswiderstands zwischen dem Anschlusspol 1 und dem Zellverbinder 49 bzw. dem Zellverbinder 49 und der Klemmeinheit 51 angeordnet sein. Die Beschichtung kann stoffschlüssig mit dem Anschlusspol 1 und/oder dem Zellverbinder 49 bzw. mit dem Zellverbinder 49 und/oder der Klemmeinheit 51 verbunden sein.

Die Vorrichtung 50 umfasst des Weiteren ein die Klemmeinheit 51 aufnehmendes Gehäuse 55 aus elektrisch isolierendem Material, das zwei parallel zueinander und zu den Klemmschenkeln 5 und 6 angeordnete Schutzschenkel 56 und 57 und einen auf der dem Zellverbinder 49 zugewandten Seite des Stegs 7 der Klemmeinheit 51 und parallel zu dem Steg 7 der Klemmeinheit 51 verlaufenden Schutzabschnitt 58 aufweist. An der dem Zellverbinder 49 zugewandten Seite des Schutzabschnitts 58 sind zwei parallel zu den Schutzschenkeln 56 und 57 verlaufende Schutzvorsprünge 59 und 60 angeordnet, welche sich bis zu dem Verbindungsabschnitt 52 erstrecken und die Klemmeinheit 51 weitestgehend unzugänglich machen. Die Schutzschenkel 56 und 57 sind über einen Steg 96 miteinander verbunden.

Figur 13 zeigt eine perspektivische Teilschnittdarstellung der in Figur 12 gezeigten Baugruppe 48. Das Gehäuse 55 der Vorrichtung 50 wirkt zur Verbesserung des Berührungsschutzes mit einem Schutzabschnitt 61 eines Zellkontaktierungssystems 62 des Batteriesystems 33 zusammen.

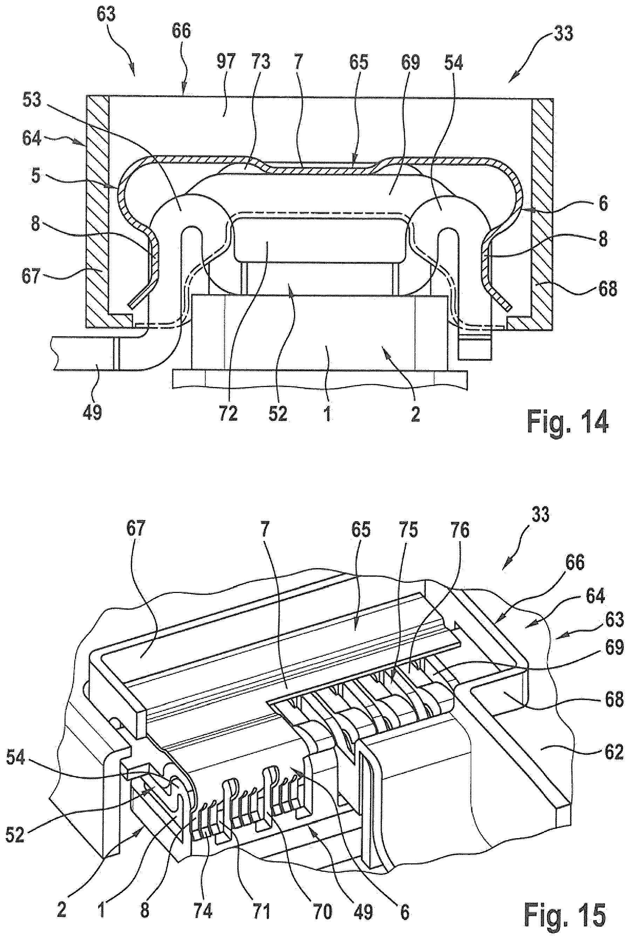

Figur 14 zeigt eine Schnittdarstellung eines weiteren Ausführungsbeispiels für eine erfindungsgemäße Baugruppe 63 zum Herstellen einer elektrisch leitenden Verbindung zwischen zwei Batteriemodulen eines Batteriesystems 33 eines elektrisch antreibbaren Kraftfahrzeugs. Die Baugruppe 63 umfasst einen Zellverbinder 49, mit dem Anschlusspole 1 von zwei Batteriezellen 2 eines Batteriemoduls elektrisch leitend miteinander verbunden sind. Des Weiteren umfasst die Baugruppe 63 eine Vorrichtung 64 zum Herstellen einer elektrisch leitenden Verbindung zwischen zwei Batteriemodulen des Batteriesystems 33.

Die Vorrichtung 64 umfasst eine an dem Zellverbinder 49 festgeklemmte Klemmeinheit 65 aus Metall, deren Ausgestaltung im Wesentlichen der Ausgestaltung der in den Figuren 1 bis 4 und 6 bis 13 gezeigten Klemmeinheit 4, 36 bzw. 51 entspricht. Jede Federlamelle 8 eines Klemmschenkels 5 bzw. 6 weist drei quer zu dem Steg 7 verlaufend, beabstandet voneinander und parallel zueinander angeordnete Unterlamellen 74 auf.

Der Zellverbinder 49 umfasst einen im Längsschnitt im Wesentlichen M-förmig ausgebildeten Verbindungsabschnitt 52 mit zwei parallel zu den Klemmschenkeln 5 und 6 verlaufenden Verbindungsschwertern 53 bzw. 54, wobei der Zellverbinder 49 über den Verbindungsabschnitt 52 mit dem Anschlusspol 1 verbunden ist.

Zwischen dem Anschlusspol 1 und dem Zellverbinder 49 und/oder zwischen dem Zellverbinder 49 und der Klemmeinheit 65 kann wenigstens eine nicht näher dargestellte Beschichtung zum Reduzieren des elektrischen Übergangswiderstands zwischen dem Anschlusspol 1 und dem Zellverbinder 49 bzw. dem Zellverbinder 49 und der Klemmeinheit 65 angeordnet sein. Die Beschichtung kann stoffschlüssig mit dem Anschlusspol 1 und/oder dem Zellverbinder 49 bzw. mit dem Zellverbinder 49 und/oder der Klemmeinheit 65 verbunden sein.

Die Vorrichtung 64 umfasst des Weiteren ein die Klemmeinheit 65 aufnehmendes Gehäuse 66 aus elektrisch isolierendem Material, das zwei parallel zueinander und zu den Klemmschenkeln 5 und 6 angeordnete Schutzschenkel 67 und 68 und einen die Schutzschenkel 67 und 68 miteinander verbindenden Steg 97 aufweist. Die Schutzschenkel 67 und 68 sind über mehrere quer zu den Schutzschenkeln 67 und 68 verlaufende Schutzrippen 69 miteinander verbunden, die auf der dem Zellverbinder 49 zugewandten Seite des Stegs 7 der Klemmeinheit 65 verlaufen. Die Klemmschenkel 5 und 6 sind gleich ausgebildet und weisen jeweils mehrere Federlamellen 6 auf. An dem Zellverbinder 49 sind in Richtung des Stegs 7 der Klemmeinheit 65 offene Ausnehmungen 70 ausgebildet, welche jeweils mit einander gegenüberliegenden Freiräumen 71 zwischen jeweils zwei benachbart zueinander angeordneten Federlamellen 8 der Klemmschenkel 5 und 6 fluchten, wobei jede Schutzrippe 69 durch zwei Freiräume 71 und durch eine Ausnehmung 70 verläuft, wie es in Figur 15 gezeigt ist. Die Schutzrippen 69 sind derart ausgebildet, dass durch sie an der dem Zellverbinder 49 zugewandten Seite des Gehäuses 66 eine Aufnahme 72 ausgebildet wird, welche innerhalb einer an der dem Zellverbinder 49 zugewandten Seite der Klemmeinheit 65 ausgebildeten Aufnahme 73 angeordnet ist.

Figur 15 zeigt eine perspektivische Viertelschnittdarstellung der in Figur 14 gezeigten Baugruppe 63. Die Vorrichtung 64 wirkt zur Verbesserung des Berührungsschutzes mit einem Schutzabschnitt 75 eines Zellkontaktierungssystems 62 des Batteriesystems 33 zusammen, wobei der Schutzabschnitt 75 mehrere parallel zu den Schutzrippen 69 verlaufende Rippen 76 aufweist.

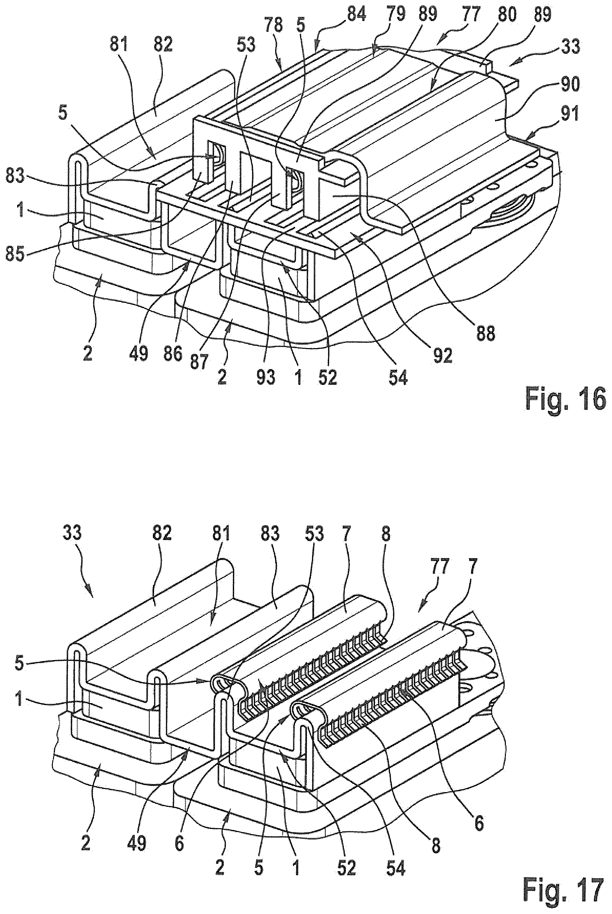

Figur 16 zeigt eine perspektivische Darstellung eines weiteren Ausführungsbeispiels für eine erfindungsgemäße Baugruppe 77 zum Herstellen einer elektrisch leitenden Verbindung zwischen zwei Batteriemodulen eines Batteriesystems 33 eines elektrisch antreibbaren Kraftfahrzeugs. Die Baugruppe 77 umfasst einen Zellverbinder 49, mit dem Anschlusspole 1 von zwei Batteriezellen 2 eines Batteriemoduls elektrisch leitend miteinander verbunden sind. Des Weiteren umfasst die Baugruppe 77 eine Vorrichtung 78 zum Herstellen einer elektrisch leitenden Verbindung zwischen zwei Batteriemodulen des Batteriesystems 33.

Die Vorrichtung 78 umfasst zwei an dem Zellverbinder 49 festklemmbare, gleich ausgebildete Klemmeinheiten 79 und 80 aus Metall, deren jeweilige Ausgestaltung im Wesentlichen der Ausgestaltung der in den Figuren 1 bis 4 und 6 bis 15 gezeigten Klemmeinheit 4, 36, 51 bzw. 65 entspricht, wobei die Klemmeinheiten 79 und 80 jeweils einen deutlich schmaleren Steg 7 als die zuvor beschriebenen Klemmeinheiten 4, 36, 51 und 65 aufweisen.

Der Zellverbinder 49 umfasst zwei im Längsschnitt im Wesentlichen M-förmig ausgebildete Verbindungsabschnitte 52 und 81 mit jeweils zwei parallel zu den Klemmschenkeln 5 und 6 verlaufenden Verbindungsschwertern 53 und 54 bzw. 82 und 83, wobei der Zellverbinder 49 über die Verbindungsabschnitte 52 und 81 mit den Anschlusspolen 1 verbunden ist. An den Verbindungsschwertern 53 und 54 ist jeweils eine Klemmeinheit 79 bzw. 80 festklemmbar.

Zwischen einem Anschlusspol 1 und dem Zellverbinder 49 und/oder zwischen dem Zellverbinder 49 und wenigstens einer Klemmeinheit 79 bzw. 80 kann wenigstens eine nicht näher dargestellte Beschichtung zum Reduzieren des elektrischen Übergangswiderstands zwischen dem Anschlusspol 1 und dem Zellverbinder 49 bzw. dem Zellverbinder 49 und der Klemmeinheit 79 bzw. 80 angeordnet sein. Die Beschichtung kann stoffschlüssig mit dem Anschlusspol 1 und/oder dem Zellverbinder 49 bzw. mit dem Zellverbinder 49 und/oder der Klemmeinheit 79 bzw. 80 verbunden sein.

An jedem Verbindungsschwert 53 bzw. 54 ist eine Klemmeinheit 79 bzw. 80 der Vorrichtung 78 festklemmbar. Die Klemmeinheiten 79 und 80 sind in einem gemeinsamen Gehäuse 84 der Baugruppe 77 aufgenommen. Jede Klemmeinheit 79 bzw. 80 ist zwischen jeweils zwei parallel zu den Klemmschenkeln 5 und 6 der Klemmeinheiten 79 und 80 verlaufenden und beabstandet voneinander angeordneten Schutzschenkeln 85 und 86 bzw. 87 und 88 des Gehäuses 84 angeordnet, wobei alle Schutzschenkel 85, 86, 87 und 88 des Gehäuses 84 über zwei gemeinsame Stege 89 des Gehäuses 84 miteinander verbunden sind. An der dem Zellverbinder 49 abgewandten Seite der Stege 7 der Klemmeinheiten 79 und 80 sind die Klemmeinheiten 79 und 80 mit einer Kontaktiereinheit 90 verbunden, über die die Klemmeinheiten 79 und 80 elektrisch leitend mit einem nicht gezeigten flexiblen elektrischen Leiter verbindbar sind. Die Vorrichtung 78 umfasst einen durch einen Abschnitt eines Zelkontaktierungssystems 91 gebildeten Schutzabschnitt 92, welcher zur Verbesserung des Berührungsschutzes mit dem Gehäuse 84 zusammenwirken kann. Der Schutzabschnitt 92 umfasst hierzu parallel zu den Schutzschenkeln 85, 86, 87 und 88 verlaufende Längsrippen 93.

Figur 17 zeigt eine perspektivische Detaildarstellung der in Figur 16 gezeigten Baugruppe 77. Aus Übersichtlichkeitsgründen sind lediglich die Klemmeinheiten 79 und 80 sowie der Zellverbinder 49 dargestellt, wobei die Klemmeinheiten 79 und 80 an den Verbindungsschwertern 53 bzw. 54 festgeklemmt sind.

### Bezugszeichenliste:

- 1: Anschlusspol
- 2: Batteriezelle
- 3: Vorrichtung
- 4: Klemmeinheit
- 5: Klemmschenkel
- 6: Klemmschenkel
- 7: Steg
- 8: Federlamelle
- 9: Kontaktierungsbereich
- 10: Kontaktierungsbereich
- 11: Kontaktierungsbereich
- 12: Vorrichtung
- 13: Kontaktiereinheit
- 14: elektrischer Leiter
- 15: Gehäuse
- 16: Sicke
- 17: Vorrichtung
- 18: Gehäuse
- 19: Schutzschenkel
- 20: Schutzschenkel
- 21: Schutzrippe
- 22: Steg
- 23: Pfeil
- 24: Vorrichtung
- 25: Gehäuse
- 26: Schutzschenkel
- 27: Schutzschenkel
- 28: Steg
- 29: Schutzrippe
- 30: Verbindungssteg
- 31: Verbindungssteg
- 32: Baugruppe
- 33: Batteriesystem
- 34: Zellverbinder
- 35: Vorrichtung
- 36: Klemmeinheit
- 37: Verbindungsabschnitt
- 38: Verbindungsabschnitt
- 39: Verbindungsschwert
- 40: Verbindungsschwert
- 41: Gehäuse
- 42: Schutzschenkel
- 43: Schutzschenkel
- 44: Schutzrippe
- 45: Verbindungssteg
- 46: Schutzabschnitt
- 47: Berührungsschutzrippe
- 48: Baugruppe
- 49: Zellverbinder
- 50: Vorrichtung
- 51: Klemmeinheit
- 52: Verbindungsabschnitt
- 53: Verbindungsschwert
- 54: Verbindungsschwert
- 55: Gehäuse
- 56: Schutzschenkel
- 57: Schutzschenkel
- 58: Schutzabschnitt
- 59: Schutzvorsprung
- 60: Schutzvorsprung
- 61: Schutzabschnitt
- 62: Zellkontaktierungssystem
- 63: Baugruppe
- 64: Vorrichtung
- 65: Klemmeinheit
- 66: Gehäuse
- 67: Schutzschenkel
- 68: Schutzschenkel
- 69: Schutzrippe
- 70: Ausnehmung
- 71: Freiraum
- 72: Aufnahme
- 73: Aufnahme
- 74: Unterlamelle
- 75: Schutzabschnitt
- 76: Rippe
- 77: Baugruppe
- 78: Vorrichtung
- 79: Klemmeinheit
- 80: Klemmeinheit
- 81: Verbindungsabschnitt
- 82: Verbindungsschwert
- 83: Verbindungsschwert
- 84: Gehäuse
- 85: Schutzschenkel
- 86: Schutzschenkel
- 87: Schutzschenkel
- 88: Schutzschenkel
- 89: Steg
- 90: Kontaktiereinheit
- 91: Zellkontaktierungssystem
- 92: Schutzabschnitt
- 93: Längsrippe
- 94: Vorrichtung
- 95: Zellkontaktierungssystem
- 96: Steg
- 97: Steg
- 98: Vorrichtung

## Patentansprüche

1. Vorrichtung (3, 12, 17, 24, 35, 50, 64, 78, 94, 98) zum Herstellen einer elektrisch leitenden Verbindung zwischen zwei Batteriemodulen eines Batteriesystems (33), insbesondere eines elektrisch antreibbaren Kraftfahrzeugs, aufweisend
wenigstens eine an einem Anschlusspol (1) einer Batteriezelle (2) eines Batteriemoduls oder an einem an dem Anschlusspol (1) angeordneten, den Anschlusspol (1) mit einem Anschlusspol (1) einer weiteren Batteriezelle (2) des Batteriemoduls elektrisch leitend verbindenden Zellverbinder (34, 49) festklemmbare Klemmeinheit (4, 36, 51, 65, 79, 80) aus Metall,
wobei die Klemmeinheit (4, 36, 51, 65, 79, 80) U-förmig oder C-förmig ausgebildet ist, wobei die Klemmeinheit (4, 36, 51, 65, 79, 80) zwei Klemmschenkel (5, 6) und einen die Klemmschenkel (5, 6) miteinander verbindenden Steg (7) aufweist, wobei die Klemmschenkel (5, 6) und/oder der Steg (7) bei an dem Anschlusspol (1) oder dem Zellverbinder (34, 49) festgeklemmter Klemmeinheit (4, 36, 51, 65, 79, 80) unter Erzeugung einer Rückstellkraft durch einen Kontakt mit dem Anschlusspol (1) bzw. dem Zellverbinder (34, 49) elastisch verformt sind bzw. ist, wobei wenigstens ein Klemmschenkel (5, 6) zumindest zwei quer zu dem Steg (7) verlaufend, beabstandet voneinander und parallel zueinander angeordnete Federlamellen (8) aufweist,
**gekennzeichnet durch**
wenigstens ein die Klemmeinheit (4, 36, 51, 65, 79, 80) aufnehmendes Gehäuse (15, 18, 25, 41) aus elektrisch isolierendem Material, das zwei parallel zueinander und zu den Klemmschenkeln (5, 6) angeordnete, elastisch verformbare Schutzschenkel (19, 20, 26, 27, 42, 43) aufweist, wobei an wenigstens einem Schutzschenkel (19, 20, 26, 27, 42, 43) an einer dem jeweils anderen Schutzschenkel (19, 20, 26, 27, 42, 43) zugewandten Seite des Schutzschenkels (19, 20, 26, 27, 42, 43) zumindest eine parallel zu den Federlamellen (8) verlaufende Schutzrippe (21, 29, 44) angeordnet ist, die derart von außen zwischen zwei benachbart zueinander angeordnete Federlamellen (8) greift, dass der Abstand zwischen der Schutzrippe (21, 29, 44) und dem ihr gegenüberliegenden Schutzschenkel (19, 20, 26, 27, 42, 43) bei nicht an dem Anschlusspol (1) bzw. dem Zellverbinder (34, 49) festgeklemmter Klemmeinheit (4, 36, 51, 65, 79, 80) kleiner als der Abstand der Federlamellen (8) zu dem ihnen gegenüberliegenden Klemmschenkel (5, 6) ist und dass der Abstand zwischen der Schutzrippe (21, 29, 44) und dem ihr gegenüberliegenden Schutzschenkel (19, 20, 26, 27, 42, 43) bei an dem Anschlusspol (1) bzw. dem Zellverbinder (34, 49) festgeklemmter Klemmeinheit (4, 36, 51, 65, 79, 80) gleich dem Abstand der Federlamellen (8) zu dem ihnen gegenüberliegenden Klemmschenkel (19, 20, 26, 27, 42, 43) ist.

2. Vorrichtung (3, 12, 17, 24, 35, 50, 64, 78, 94, 98) nach Anspruch 1, **dadurch gekennzeichnet, dass** wenigstens eine Federlamelle (8) zumindest zwei quer zu dem Steg (7) verlaufend, beabstandet voneinander und parallel zueinander angeordnete Unterlamellen (74) aufweist.

3. Vorrichtung (3, 12, 17, 24, 35, 50, 64, 78, 94, 98) nach Anspruch 1 oder 2, **dadurch gekennzeichnet, dass** an wenigstens einer Federlamelle (8) eine in Längsrichtung der Federlamelle (8) verlaufende Sicke (16) ausgebildet ist.

4. Vorrichtung (3, 12, 17, 24, 35, 50, 64, 78, 94, 98) nach Anspruch 3, **dadurch gekennzeichnet, dass** an wenigstens zwei Federlamellen (8) jeweils zumindest eine Sicke (16) ausgebildet ist, wobei sich die Federlamellen (8) in der Formgebung ihrer jeweiligen Sicken (16) voneinander unterscheiden.

5. Vorrichtung (3, 12, 17, 24, 35, 50, 64, 78, 94, 98) nach einem der Ansprüche 1 bis 4, **gekennzeichnet durch** wenigstens eine elektrisch zwischen dem Anschlusspol (1) und der Klemmeinheit (4, 36, 51, 65, 79, 80) anordbare Beschichtung zum Reduzieren des elektrischen Übergangswiderstands zwischen dem Anschlusspol (1) und der Klemmeinheit (4, 36, 51, 65, 79, 80), zwischen dem Anschlusspol (1) und dem Zellverbinder (34, 49) oder zwischen dem Zellverbinder (34, 49) und der Klemmeinheit (4, 36, 51, 65, 79, 80).

6. Vorrichtung (3, 12, 17, 24, 35, 50, 64, 78, 94, 98) nach einem der Ansprüche 1 bis 5, **gekennzeichnet durch** wenigstens einen auf der dem Anschlusspol (1) bzw. dem Zellverbinder (34, 49) zugewandten Seite des Stegs (7) der Klemmeinheit (4, 36, 51, 65, 79, 80) angeordneten, durch einen Abschnitt eines Zellkontaktierungssystems (62, 91, 95) gebildeten Schutzabschnitt (46, 61, 75, 92), der wenigstens an einem einem Klemmschenkel (5, 6) zugewandten Rand zumindest teilweise mit Berührungsschutzrippen (47) versehen ist.

7. Vorrichtung (3, 12, 17, 24, 35, 50, 64, 78, 94, 98) nach einem der Ansprüche 1 bis 6, **gekennzeichnet durch** wenigstens eine elektrisch leitend mit dem Steg (7) der Klemmeinheit (4, 36, 51, 65, 79, 80) verbindbare Kontaktiereinheit (13, 90), mit der die Klemmeinheit (4, 36, 51, 65, 79, 80) elektrisch leitend mit einem flexiblen elektrischen Leiter (14) verbindbar ist.

8. Vorrichtung (3, 12, 17, 24, 35, 50, 64, 78, 94, 98) nach einem der Ansprüche 1 bis 7, **dadurch gekennzeichnet, dass** an dem Schutzschenkel (19, 20, 26, 27, 42, 43) wenigstens zwei parallel zu den Federlamellen (8) verlaufende Schutzrippen (21, 29, 44) beabstandet voneinander ausgebildet sind, wobei dem Steg (7) der Klemmeinheit (4, 36, 51, 65, 79, 80) abgewandte Enden der Schutzrippen (21, 29, 44) über wenigstens einen gemeinsamen Verbindungssteg (30, 31, 45) miteinander verbunden sind.

9. Vorrichtung (3, 12, 17, 24, 35, 50, 64, 78, 94, 98) nach einem der Ansprüche 1 bis 8, **gekennzeichnet durch** wenigstens ein die Klemmeinheit (4, 36, 51, 65, 79, 80) aufnehmendes Gehäuse (55) aus elektrisch isolierendem Material, das zwei parallel zueinander und zu den Klemmschenkeln (5, 6) angeordnete Schutzschenkel (56, 57) und wenigstens einen auf der dem Zellverbinder (34, 49) zugewandten Seite des Stegs (7) der Klemmeinheit (4, 36, 51, 65, 79, 80) und parallel zu dem Steg (7) der Klemmeinheit (4, 36, 51, 65, 79, 80) verlaufenden Schutzabschnitt (58) aufweist, wobei an der dem Zellverbinder (34, 49) zugewandten Seite des Schutzabschnitts (58) wenigstens ein parallel zu den Schutzschenkeln (56, 57) verlaufender Schutzvorsprung (59, 60) angeordnet ist.

10. Verbindungseinrichtung zum Herstellen einer elektrisch leitenden Verbindung zwischen zwei Batteriemodulen eines Batteriesystems, insbesondere eines elektrisch antreibbaren Kraftfahrzeugs, aufweisend wenigstens einen flexiblen elektrischen Leiter (14) und wenigstens eine elektrisch leitend mit dem flexiblen elektrischen Leiter verbundene Vorrichtung (3, 12, 17, 24, 35, 50, 64, 78, 94, 98) nach einem der Ansprüche 1 bis 9.

11. Baugruppe (32, 48, 63, 77) zum Herstellen einer elektrisch leitenden Verbindung zwischen zwei Batteriemodulen eines Batteriesystems, insbesondere eines elektrisch antreibbaren Kraftfahrzeugs, aufweisend wenigstens einen Zellverbinder (34, 49), mit dem Anschlusspole (1) von zwei Batteriezellen (2) eines Batteriemoduls elektrisch leitend miteinander verbindbar sind, und wenigstens eine Vorrichtung (3, 12, 64, 94, 98) nach einem der Ansprüche 1 bis 7.

12. Baugruppe (32, 48, 63, 77) nach Anspruch 11, **gekennzeichnet durch** wenigstens ein die Klemmeinheit (4, 36, 51, 65, 79, 80) aufnehmendes Gehäuse (66) aus elektrisch isolierendem Material, das zwei parallel zueinander und zu den Klemmschenkeln (5, 6) angeordnete Schutzschenkel (67, 68) aufweist, wobei die Schutzschenkel (67, 68) über wenigstens eine quer zu den Schutzschenkeln (67, 68) verlaufende Schutzrippe (69) miteinander verbunden sind, die auf der dem Zellverbinder (34, 49) zugewandten Seite des Stegs (7) der Klemmeinheit (4, 36, 51, 65, 79, 80) verläuft,
- wobei die Klemmschenkel (5, 6) gleich ausgebildet sind und jeweils Federlamellen (8) aufweisen, wobei an dem Zellverbinder (34, 49) wenigstens eine in Richtung des Stegs (7) der Klemmeinheit (4, 36, 51, 65, 79, 80) offene Ausnehmung (70) ausgebildet ist, welche mit einander gegenüberliegenden Freiräumen (71) zwischen jeweils zwei benachbart zueinander angeordneten Federlamellen (8) der Klemmschenkel (5, 6) fluchtet, wobei die Schutzrippe (69) durch die Freiräume (71) und durch die Ausnehmung (70) verläuft,
- wobei die Schutzrippe (69) derart ausgebildet ist, dass durch sie an der dem Zellverbinder (34, 49) zugewandten Seite des Gehäuses (66) eine Aufnahme (72) ausgebildet wird, welche innerhalb einer an der dem Zellverbinder (34, 49) zugewandten Seite der Klemmeinheit (4, 36, 51, 65, 79, 80) ausgebildeten Aufnahme (73) angeordnet ist.

13. Baugruppe (32, 48, 63, 77) nach Anspruch 11 oder 12, **dadurch gekennzeichnet, dass** der Zellverbinder (34, 49) wenigstens einen im Längsschnitt im Wesentlichen M-förmig ausgebildeten Verbindungsabschnitt (37, 38, 52, 81) mit zwei parallel zu den Klemmschenkeln (5, 6) verlaufenden Verbindungsschwertern (39, 40, 53, 54, 82, 83) aufweist, über den der Zellverbinder (34, 49) mit dem Anschlusspol (1) verbindbar ist, wobei an wenigstens einem Verbindungsschwert (39, 40, 53, 54, 82, 83) zumindest eine Klemmeinheit (4, 36, 51, 65, 79, 80) festklemmbar ist.

14. Baugruppe (32, 48, 63, 77) nach Anspruch 13, **dadurch gekennzeichnet, dass** an jedem Verbindungsschwert (39, 40, 53, 54, 82, 83) wenigstens eine Klemmeinheit (4, 36, 51, 65, 79, 80) festklemmbar ist, wobei die Klemmeinheiten (4, 36, 51, 65, 79, 80) in einem gemeinsamen Gehäuse (84) der Baugruppe (32, 48, 63, 77) aufgenommen sind, wobei jede Klemmeinheit (4, 36, 51, 65, 79, 80) zwischen jeweils zwei parallel zu den Klemmschenkeln (5, 6) der Klemmeinheiten (4, 36, 51, 65, 79, 80) verlaufenden und beabstandet voneinander angeordneten Schutzschenkeln (85, 86, 87, 88) des Gehäuses (84) angeordnet sind, wobei alle Schutzschenkel (85, 86, 87, 88) des Gehäuses (84) über einen gemeinsamen Steg (89) des Gehäuses (84) miteinander verbunden sind.

15. Baugruppe (32, 48, 63, 77) nach einem der Ansprüche 11 bis 13, **dadurch gekennzeichnet, dass** wenigstens eine Klemmeinheit (4, 36, 51, 65, 79, 80) und der Zellverbinder (34, 49) derart ausgebildet sind, dass die Klemmeinheit (4, 36, 51, 65, 79, 80) über eine Clips-Verbindung mit dem Zellverbinder (34, 49) verbindbar ist.

## Claims

1. A device (3, 12, 17, 24, 35, 50, 64, 78, 94, 98) for producing an electrically conductive connection between two battery modules of a battery system (33), especially of an electrically drivable motor vehicle, having at least one clamping unit (4, 36, 51, 65, 79, 80) made of metal, which can be clamped securely on a terminal pole (1) of a battery cell (2) of a battery module or on a cell connector (34, 49) which is arranged on the terminal pole (1) and connects the terminal pole (1) in electrically conductive manner to a terminal pole (1) of a further battery cell (2) of the battery module,
wherein the clamping unit (4, 36, 51, 65, 79, 80) is U-shaped or C-shaped, wherein the clamping unit (4, 36, 51, 65, 79, 80) has two clamping legs (5, 6) and a crosspiece (7) which connects the clamping legs (5, 6) together, wherein the clamping legs (5, 6) and/or the crosspiece (7), when the clamping unit (4, 36, 51, 65, 79, 80) is clamped securely on the terminal pole (1) or the cell connector (34, 49), are or is respectively elastically deformed, generating a restoring force by contact with the terminal pole (1) or the cell connector (34, 49), wherein at least one clamping leg (5, 6) has at least two spring lamellae (8) arranged running transversely to the crosspiece (7), spaced apart from each other and parallel to each other,
**characterised by**
at least one housing (15, 18, 25, 41) made of electrically insulating material which receives the clamping unit (4, 36, 51, 65, 79, 80), which housing has two elastically deformable protective legs (19, 20, 26, 27, 42, 43) arranged parallel to each other and to the clamping legs (5, 6), with at least one protective rib (21, 29, 44) running parallel to the spring lamellae (8) being arranged on at least one protective leg (19, 20, 26, 27, 42, 43) on a side of the protective leg (19, 20, 26, 27, 42, 43) which faces the other protective leg (19, 20, 26, 27, 42, 43) in each case, which rib engages from outside between two spring lamellae (8) arranged adjacent to one another, in such a way that the distance between the protective rib (21, 29, 44) and the protective leg (19, 20, 26, 27, 42, 43) located opposite it, when the clamping unit (4, 36, 51, 65, 79, 80) is not clamped securely to the terminal pole (1) or the cell connector (34, 49), is less than the distance of the spring lamellae (8) from the clamping leg (5, 6) located opposite them, and that the distance between the protective rib (21, 29, 44) and the protective leg (19, 20, 26, 27, 42, 43) located opposite it, when the clamping unit (4, 36, 51, 65, 79, 80) is clamped securely to the terminal pole (1) or the cell connector (34, 49), is equal to the distance of the spring lamellae (8) from the clamping leg (19, 20, 26, 27, 42, 43) located opposite them.

2. A device (3, 12, 17, 24, 35, 50, 64, 78, 94, 98) according to Claim 1, **characterised in that** at least one spring lamella (8) has at least two sub-lamellae (74) arranged running transversely to the crosspiece (7), spaced apart from each other and parallel to each other.

3. A device (3, 12, 17, 24, 35, 50, 64, 78, 94, 98) according to Claim 1 or Claim 2, **characterised in that** a bead (16) running in the longitudinal direction of the spring lamella (8) is formed on at least one spring lamella (8).

4. A device (3, 12, 17, 24, 35, 50, 64, 78, 94, 98) according to Claim 3, **characterised in that** in each case at least one bead (16) is formed on at least two spring lamellae (8), the spring lamellae (8) differing from each other in the shaping of their respective beads (16).

5. A device (3, 12, 17, 24, 35, 50, 64, 78, 94, 98) according to one of Claims 1 to 4, **characterised by** at least one coating, which can be arranged electrically between the terminal pole (1) and the clamping unit (4, 36, 51, 65, 79, 80), for reducing the electrical contact resistance between the terminal pole (1) and the clamping unit (4, 36, 51, 65, 79, 80), between the terminal pole (1) and the cell connector (34, 49), or between the cell connector (34, 49) and the clamping unit (4, 36, 51, 65, 79, 80).

6. A device (3, 12, 17, 24, 35, 50, 64, 78, 94, 98) according to one of Claims 1 to 5, **characterised by** at least one protective portion (46, 61, 75, 92) arranged on that side of the crosspiece (7) of the clamping unit (4, 36, 51, 65, 79, 80) which faces the terminal pole (1) or the cell connector (34, 49) and formed by a portion of a cell contacting system (62, 91, 95), which protective portion is provided at least partially with contact protection ribs (47) at least on an edge which faces a clamping leg (5, 6).

7. A device (3, 12, 17, 24, 35, 50, 64, 78, 94, 98) according to one of Claims 1 to 6, **characterised by** at least one contacting unit (13, 90) which can be connected in electrically conductive manner to the crosspiece (7) of the clamping unit (4, 36, 51, 65, 79, 80), with which contacting unit the clamping unit (4, 36, 51, 65, 79, 80) can be connected in electrically conductive manner to a flexible electrical conductor (14).

8. A device (3, 12, 17, 24, 35, 50, 64, 78, 94, 98) according to one of Claims 1 to 7, **characterised in that** at least two protective ribs (21, 29, 44) running parallel to the spring lamellae (8) are formed spaced apart from each other on the protective leg (19, 20, 26, 27, 42, 43), with ends of the protective ribs (21, 29, 44) which are remote from the crosspiece (7) of the clamping unit (4, 36, 51, 65, 79, 80) being connected together by means of at least one common connecting crosspiece (30, 31, 45).

9. A device (3, 12, 17, 24, 35, 50, 64, 78, 94, 98) according to one of Claims 1 to 8, **characterised by** at least one housing (55) of electrically insulating material which receives the clamping unit (4, 36, 51, 65, 79, 80), which housing has two protective legs (56, 57) which are arranged parallel to each other and to the clamping legs (5, 6) and at least one protective portion (58) which runs on that side of the crosspiece (7) of the clamping unit (4, 36, 51, 65, 79, 80) which faces the cell connector (34, 49) and parallel to the crosspiece (7) of the clamping unit (4, 36, 51, 65, 79, 80), with at least one protective projection (59, 60) which runs parallel to the protective legs (56, 57) being arranged on the side of the protective portion (58) facing the cell connector (34, 49).

10. A connecting means for producing an electrically conductive connection between two battery modules of a battery system, especially of an electrically drivable motor vehicle, having at least one flexible electrical conductor (14) and at least one device (3, 12, 17, 24, 35, 50, 64, 78, 94, 98) according to one of Claims 1 to 9 connected in electrically conductive manner to the flexible electrical conductor.

11. An assembly (32, 48, 63, 77) for producing an electrically conductive connection between two battery modules of a battery system, especially of an electrically drivable motor vehicle, having at least one cell connector (34, 49) with which terminal poles (1) of two battery cells (2) of a battery module can be connected together in electrically conductive manner and at least one device (3, 12, 64, 94, 98) according to one of Claims 1 to 7.

12. An assembly (32, 48, 63, 77) according to Claim 11, **characterised by** at least one housing (66) of electrically insulating material which receives the clamping unit (4, 36, 51, 65, 79, 80) and which has two protective legs (67, 68) arranged parallel to each other and to the clamping legs (5, 6), with the protective legs (67, 68) being connected together by means of at least one protective rib (69) which runs transversely to the protective legs (67, 68) and runs on that side of the crosspiece (7) of the clamping unit (4, 36, 51, 65, 79, 80) which faces the cell connector (34, 49),
- wherein the clamping legs (5, 6) are configured identically and in each case have spring lamellae (8), wherein at least one cutout (70) which is open in the direction of the crosspiece (7) of the clamping unit (4, 36, 51, 65, 79, 80) is formed on the cell connector (34, 49), which cutout is flush with gaps (71), located opposite each other, between in each case two spring lamellae (8) of the clamping legs (5, 6) which are arranged adjacent to each other, wherein the protective rib (69) runs through the gaps (71) and through the cutout (70),
- wherein the protective rib (69) is configured in such a way that a receptacle (72) is formed by it on that side of the housing (66) which faces the cell connector (34, 49), which receptacle is arranged within a receptacle (73) formed on that side of the clamping unit (4, 36, 51, 65, 79, 80) which faces the cell connector (34, 49).

13. An assembly (32, 48, 63, 77) according to Claim 11 or Claim 12, **characterised in that** the cell connector (34, 49) has at least one connection portion (37, 38, 52, 81), which is substantially M-shaped in longitudinal section, with two connecting blades (39, 40, 53, 54, 82, 83) which run parallel to the clamping legs (5, 6), by means of which portion the cell connector (34, 49) can be connected to the terminal pole (1), with at least one clamping unit (4, 36, 51, 65, 79, 80) being able to be clamped securely on at least one connecting blade (39, 40, 53, 54, 82, 83).

14. An assembly (32, 48, 63, 77) according to Claim 13, **characterised in that** at least one clamping unit (4, 36, 51, 65, 79, 80) can be clamped securely on each connecting blade (39, 40, 53, 54, 82, 83), the clamping units (4, 36, 51, 65, 79, 80) being received in a common housing (84) of the assembly (32, 48, 63, 77), each clamping unit (4, 36, 51, 65, 79, 80) being arranged between in each case two protective legs (85, 86, 87, 88) of the housing (84) which run parallel to the clamping legs (5, 6) of the clamping units (4, 36, 51, 65, 79, 80) and are arranged spaced apart from each other, all the protective legs (85, 86, 87, 88) of the housing (84) being connected together by means of a common crosspiece (89) of the housing (84).

15. An assembly (32, 48, 63, 77) according to one of Claims 11 to 13, **characterised in that** at least one clamping unit (4, 36, 51, 65, 79, 80) and the cell connector (34, 49) are configured in such a way that the clamping unit (4, 36, 51, 65, 79, 80) can be connected to the cell connector (34, 49) by means of a clip-type connection.

## Revendications

1. Dispositif (3, 12, 17, 24, 35, 50, 64, 78, 94, 98) pour réaliser une liaison électro-conductrice entre deux modules de batterie d'un système de batteries (33), notamment d'un véhicule électrique comprenant :
- au moins une unité de pince (4, 36, 51, 65, 79, 80) en métal, installée sur un pôle de branchement (1) d'une cellule de batteries (2) d'un module de batteries ou sur un pôle de branchement (1) reliant le pôle de branchement (1) à un pôle de branchement (1) d'une autre cellule de batterie (2) du module de batteries par un connecteur de cellules (34, 49) électro-conducteur,
- l'unité de pinces (4, 36, 51, 65, 79, 80) étant réalisée en forme de U ou en forme de C, cette unité de pinces (4, 36, 51, 65, 79, 80) ayant deux branches de pinces (5, 6) reliées par une entretoise (7),
- les branches de pince (5, 6) et/ou l'entretoise (7) étant déformable élastiquement par l'unité de pinces (4, 36, 51, 65, 79, 80) fixée sur le pôle de branchement (1) ou le connecteur (34, 49) en créant une force de rappel par le contact avec le pôle de branchement (1) ou le connecteur de cellules (34, 49) par déformation élastique,
- au moins une branche de pince (5, 6) ayant au moins deux lamelles de ressort (8) parallèles, écartées et orientées transversalement à l'entretoise (7),
**caractérisé en ce qu'**
- au moins un boîtier (15, 18, 25, 41) en une matière isolante électrique recevant l'unité de pince (4, 36, 51, 65, 79, 80), et qui comporte deux branches protectrices (19, 20, 26, 27, 42, 43), parallèles, disposées par rapport aux branches de pince (5, 6),
- au moins une branche protectrice (19, 20, 26, 27, 42, 43) ayant sur le côté de la branche protectrice (19, 20, 26, 27, 42, 43) tourné chaque fois vers une autre branche protectrice (19, 20, 26, 27, 42, 43), au moins une nervure protectrice (21, 29, 44) parallèle aux lamelles de ressort (8), et qui vient prendre par l'extérieur entre deux lamelles de ressort (8), parallèles, de façon que la distance entre la nervure d'appui (21, 29, 44) et la branche protectrice (19, 20, 26, 27, 42, 43) qui lui fait face, lorsque l'unité de pince (4, 36, 51, 65, 79, 80), non serrée sur le pôle de branchement (1) ou le connecteur de cellule (34, 49), est inférieure à la distance entre les lamelles de ressort (8) par rapport à la branche de ressort (5, 6) qui leur fait face et **en ce que** la distance entre la nervure protectrice (21, 29, 44) et la branche protectrice (19, 20, 26, 27, 42, 43) qui lui fait face, pour une unité de serrage (4, 36, 51, 65, 79, 80) serrée sur le pôle de branchement (1) ou le connecteur de cellules (34, 49), est égale à la distance entre les lamelles de ressort (8) et les branches de serrage (19, 20, 26, 27, 42, 43) qui leur font face.

2. Dispositif (3, 12, 17, 24, 35, 50, 64, 78, 94, 98) selon la revendication 1,
**caractérisé en ce qu'**
au moins une lamelle de ressort (8) comporte au moins deux sous-lamelles (74) orientées transversalement à l'entretoise (7), en étant écartées et parallèles entre elles.

3. Dispositif (3, 12, 17, 24, 35, 50, 64, 78, 94, 98) selon la revendication 1 ou 2,
**caractérisé en ce qu'**
au moins une lamelle de ressort (8) comporte une nervure (16) orientée dans la direction longitudinale de la lamelle élastique (8).

4. Dispositif (3, 12, 17, 24, 35, 50, 64, 78, 94, 98) selon la revendication 3,
**caractérisé en ce qu'**
au moins deux lamelles de ressort (8) ont chacune au moins une nervure (16) et les lamelles de ressort (8) diffèrent l'une de l'autre par la forme des nervures respectives (16).

5. Dispositif (3, 12, 17, 24, 35, 50, 64, 78, 94, 98) selon l'une des revendications 1 à 4,
**caractérisé par**
au moins un revêtement électrique entre le pôle de branchement (1) et l'unité de pinces (4, 36, 51, 65, 79, 80) servant à réduire la résistance électrique de passage entre le pôle de branchement (1) et l'unité de serrage (4, 36, 51, 65, 79, 80), entre le pôle de branchement (1) le connecteur de cellules (34, 49), ou entre le connecteur de cellules (34, 49) et l'unité de serrage (4, 36, 51, 65, 79, 80).

6. Dispositif (3, 12, 17, 24, 35, 50, 64, 78, 94, 98) selon l'une des revendications 1 à 5,
**caractérisé par**
au moins un segment protecteur (46, 61, 75, 92) formé par un segment d'un système de contact de cellules (62, 91, 95), sur le côté de l'entretoise (7) de l'unité de serrage (4, 36, 51, 65, 79, 80), tournée vers le pôle de branchement (1) ou le connecteur de cellules (34, 49), ce segment protecteur étant muni en partie de nervures de contact (47) sur au moins un bord tourné vers une branche de connecteur (5, 6).

7. Dispositif (3, 12, 17, 24, 35, 50, 64, 78, 94, 98) selon l'une des revendications 1 à 6,
**caractérisé par**
au moins une unité de contact (13, 90) reliée électriquement à l'entretoise (7) de l'unité de serrage (4, 36, 51, 65, 79, 80), et qui relie cette unité de serrage (4, 36, 51, 65, 79, 80) électriquement à un conducteur électrique souple (14).

8. Dispositif (3, 12, 17, 24, 35, 50, 64, 78, 94, 98) selon l'une des revendications 1 à 7,
**caractérisé en ce que**
la branche protectrice (19, 20, 26, 27, 42, 43) comporte au moins deux nervures protectrices (21, 29, 44) parallèles aux lamelles de ressort (8), ces nervures étant écartées l'une de l'autre,
- les extrémités des nervures protectrices (21, 29, 44) non tournées vers l'entretoise (7) de l'unité de serrage (4, 36, 51, 65, 79, 80), étant reliées par au moins une entretoise de liaison commune (30, 31, 45).

9. Dispositif (3, 12, 17, 24, 35, 50, 64, 78, 94, 98) selon l'une des revendications 1 à 8,
**caractérisé par**
au moins un boîtier (55) en une matière électro-isolante recevant l'unité de serrage (4, 36, 51, 65, 79, 80), ce boîtier ayant deux branches protectrices (56, 57) parallèles entre elles et aux branches de serrage (5, 6) ainsi qu'au moins un segment protecteur (58) sur le côté de l'entretoise (7) de l'unité de serrage (4, 36, 51, 65, 79, 80), tourné vers le connecteur de cellule (34, 49) et parallèle à l'entretoise (7) de l'unité de serrage (4, 36, 51, 65, 79, 80),
le côté du segment protecteur (58) tourné vers le connecteur de cellule (34, 49) ayant au moins une nervure protectrice (59, 60) parallèle aux branches protectrices (56, 57).

10. Installation de liaison pour réaliser une liaison électro-conductrice entre deux modules de batteries d'un système de batteries notamment d'un véhicule à moteur électrique comportant au moins un conducteur électro-flexible (14) et au moins un dispositif (3, 12, 17, 24, 35, 50, 64, 78, 94, 98) relié électriquement au conducteur électrique flexible selon l'une des revendications 1 à 9.

11. Ensemble (32, 48, 63, 77) pour réaliser une liaison électro-conductrice entre deux modules de batterie d'un système de batteries et en particulier un véhicule automobile à entraînement électrique, comportant au moins un connecteur de cellules (34, 49) qui relie électriquement le pôle de branchement (1) de deux cellules de batteries (2) d'un module de batteries et au moins un dispositif (3, 12, 64, 94, 98) selon l'une des revendications 1 à 7.

12. Ensemble (32, 48, 63, 77) selon la revendication 11,
**caractérisé par**
au moins un boîtier (66) en une matière électro-isolante recevant l'unité de serrage (4, 36, 51, 65, 79, 80) qui a deux branches protectrices (67, 68) parallèles entre elles et deux branches de serrage (5, 6),
les branches protectrices (67, 68) étant reliées par au moins une nervure protectrice (69) orientée transversalement aux branches protectrices (67, 68), cette nervure passant sur le côté de l'entretoise (7) de l'unité de serrage (4, 36, 51, 65, 79, 80), côté tourné vers le connecteur de cellules (34, 49),
les branches de serrage (5, 6) étant identiques et ayant des lamelles de ressort (8),
- le connecteur de liaison (34, 49) ayant au moins dans une direction de l'entretoise (7) de l'unité de serrage (4, 36, 51, 65, 79, 80) un évidement (70) ouvert, cet évidement étant aligné avec des espaces libres (71) qui se font face, entre chaque fois deux lamelles de ressort (8) associées voisines des branches de serrage (5, 6), la nervure protectrice (69) passant par les espaces libres (71) et par l'évidement (70),
- la nervure protectrice (69) étant réalisée de façon qu'elle forme sur le côté du boîtier (66) tourné vers le connecteur de cellule (34, 49), un évidement (72) qui se trouve en évidement (73) dans l'un des côtés de l'unité de serrage (4, 36, 51, 65, 79, 80) tourné vers le connecteur cellule (34, 49).

13. Ensemble (32, 48, 63, 77) selon la revendication 11 ou 12, **caractérisé en ce que**
le connecteur de cellules (34, 49) comporte au moins un segment de liaison (37, 38, 52, 81) ayant, en coupe longitudinale, une forme pratiquement en M, avec deux lames de liaison (39, 40, 53, 54, 82, 83) parallèles aux branches de serrage (5, 6) et par lesquelles le connecteur de cellule (34, 49) est relié au pôle de branchement (1),
au moins l'une des lames de liaison (39, 40, 53, 54, 82, 83) étant serrée par au moins une unité de serrage (4, 36, 51, 65, 79, 80).

14. Ensemble (32, 48, 63, 77) selon la revendication 13,
**caractérisé en ce qu'**
au moins une unité de serrage (4, 36, 51, 65, 79, 80) est serrée sur chaque lame de liaison (39, 40, 53, 54, 82, 83), les unités de serrage (4, 36, 51, 65, 79, 80) étant logées dans un boîtier commun (84) de l'ensemble (32, 48, 63, 77), chaque unité de serrage (4, 36, 51, 65, 79, 80) étant disposée entre chaque fois deux branches protectrices (85, 86, 87, 88) du boîtier (84) parallèle aux branches de serrage (5, 6) des unités de serrage (4, 36, 51, 65, 79, 80) en étant écartées l'une de l'autre, toutes les branches protectrices (85, 86, 87, 88) du boîtier (84) étant relié par une entretoise commune (89) du boîtier (84).

15. Ensemble (32, 48, 63, 77) selon l'une des revendications 1 à 13,
**caractérisé en ce qu'**
au moins une unité de serrage (4, 36, 51, 65, 79, 80) et le connecteur de cellule (34, 49) sont réalisés pour que l'unité de serrage (4, 36, 51, 65, 79, 80) puisse être reliée au connecteur de cellule (34, 49) par une liaison d'enclipsage.
